(19) Europäisches Patentamt
European Patent Office
Office européen des brevets

(11) **EP 4 400 405 A1**

(12) **EUROPEAN PATENT APPLICATION**
published in accordance with Art. 153(4) EPC

(43) Date of publication:
**17.07.2024 Bulletin 2024/29**

(21) Application number: **21956797.1**

(22) Date of filing: **10.09.2021**

(51) International Patent Classification (IPC):
***B63B 43/18*** (2006.01)      ***B63B 49/00*** (2006.01)
***G08G 3/00*** (2006.01)

(52) Cooperative Patent Classification (CPC):
**B63B 43/18; B63B 49/00; G08G 3/00**

(86) International application number:
**PCT/JP2021/033331**

(87) International publication number:
**WO 2023/037500 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Pioneer Corporation
Tokyo 113-0021 (JP)**

• **Pioneer Smart Sensing Innovations Corporation
Tokyo 113-0021 (JP)**

(72) Inventors:
• **KATO, Masahiro
Kawagoe-shi, Saitama 350-8555 (JP)**
• **MATSUMOTO, Reiji
Kawagoe-shi, Saitama 350-8555 (JP)**

(74) Representative: **Viering, Jentschura & Partner
mbB
Patent- und Rechtsanwälte
Am Brauhaus 8
01099 Dresden (DE)**

(54) **INFORMATION PROCESSING DEVICE, DETERMINING METHOD, PROGRAM, AND STORAGE MEDIUM**

(57)     The controller 13 of the information processing device 1 acquires predicted water level information D1 regarding a predicted water level at water level prediction points subjected to prediction of a water level on one or more candidate routes serving as candidates for an operation route of a ship. Then, the controllers 13 calculate, based on the predicted water level information D1, a predicted bridge water level which is a predicted water level at an expected passing time when the ship passes each bridge passing point, which is a point of each bridge passed by the ship existing on the candidate routes. Then, the controller 13 determines the suitability of each of the candidate routes as the operation route, based on the predicted bridge water level.

FIG. 10

```
OPERATION ROUTE
DETERMINATION PROCESS START

S11  ACQUIRE CANDIDATE ROUTE

S12  RECEIVE PREDICTED WATER LEVEL INFORMATION INDICATING
     PREDICTED WATER LEVEL AT EACH WATER LEVEL PREDICTION
     POINT ON EACH CANDIDATE ROUTE

S13  CALCULATE EXPECTED PASSING TIME & PREDICTED BRIDGE WATER
     LEVEL AT EACH BRIDGE PASSING POINT ON EACH CANDIDATE
     ROUTE

S14  ACQUIRE BRIDGE HEIGHT OF EACH BRIDGE ON EACH CANDIDATE
     ROUTE FROM RIVER MAP DATA

S15  CALCULATE WATER SURFACE DISTANCE
     BASED ON WATER MEASUREMENT DATA

S16  CALCULATE SHIP HIGHEST POINT HEIGHT
     AT EACH BRIDGE PASSING POINT
     BASED ON PREDICTED BRIDGE WATER LEVEL, WATER SURFACE
     DISTANCE, & HIGHEST POINT INFORMATION

S17  CALCULATE PREDICTED CLEARANCE &
     DETERMINE PASSING FEASIBILITY
     BASED ON BRIDGE HEIGHT & SHIP HIGHEST POINT HEIGHT

S18  SELECT CANDIDATE ROUTE
     WITH ALL PASSABLE BRIDGE AS OPERATION ROUTE

END
```

EP 4 400 405 A1

**Description**

TECHNICAL FIELD

The present disclosure relates to determination of an operation route of a ship.

BACKGROUND

Conventionally, there is known a technique for estimating a self position of a moving body by matching (registration) between shape data of surrounding objects measured using a measurement device such as a laser scanner and map information in which the shapes of the surrounding objects are stored in advance. For example, Patent Literature 1 discloses an autonomous moving system configured to determine whether a detected object in voxels, which are obtained by dividing a space according to a predetermined pattern, is a stationary object or a moving object, and perform matching between measured data and the map data with respect to voxels determined to include a stationary object. Further, Patent Literature 2 discloses a scan matching method for performing self position estimation by matching between point cloud data outputted by a lidar and voxel data including a mean vector and a covariance matrix regarding a stationary object for each voxel. Furthermore, Patent Literature 3 discloses an autonomous shore reaching device configured to autonomously control a ship to get ashore, wherein the autonomous shore reaching device controls the posture of the ship so that a lidar can receive a light emitted by the lidar and reflected by an object in the vicinity of the shore to be reached.

PRIOR ART DOCUMENTS

PATENT LITERATURE

Patent Literature 1: WO2013/076829
Patent Literature 2: WO2018/221453
Patent Literature 3: JP2020-59403A

SUMMARY

PROBLEM TO BE SOLVED BY THE INVENTION

When determining the operation route, it is necessary to select a route on which the ship can safely pass under the bridge. In selecting such a route, it is necessary to accurately determine whether or not a candidate route is suitable as an operation route of the ship, considering that the water level differs depending on the time and the place on the river.
The present disclosure has been made to solve the problems as described above, and it is an object of the present invention to provide an information processing device capable of accurately determining whether or not a route as a candidate for an operation route is suitable as the operation route.

MEANS FOR SOLVING THE PROBLEM

One invention is an information processing device including:

a predicted water level information acquisition unit configured to acquire predicted water level information regarding predicted water levels at water level prediction points at which a water level is predicted on one or more candidate routes serving as candidates for an operation route of a ship;
a predicted bridge water level calculation unit configured to calculate, based on the predicted water level information, a predicted bridge water level which is a predicted water level at an expected passing time when the ship passes each bridge passing point, which is a point of each of bridges passed by the ship, the bridges existing on the candidate routes; and
a determination unit configured to determine, based on the predicted bridge water level, a suitability of each of the candidate routes as the operation route.

Another invention is a determination method executed by a computer, the determination method including:

acquiring predicted water level information regarding predicted water levels at water level prediction points at which a water level is predicted on one or more candidate routes serving as candidates for an operation route of a ship; calculating, based on the predicted water level information, a predicted bridge water level which is a predicted water level at an expected passing time when the ship passes each bridge passing point, which is a point of each of bridges passed by the ship,

the bridges existing on the candidate routes; and

determining, based on the predicted bridge water level, a suitability of each of the candidate routes as the operation route.

Still another invention is a program causing a computer to:

acquire predicted water level information regarding predicted water levels at water level prediction points at which a water level is predicted on one or more candidate routes serving as candidates for an operation route of a ship; calculate, based on the predicted water level information, a predicted bridge water level which is a predicted water level at an expected passing time when the ship passes each bridge passing point, which is a point of each of bridges passed by the ship,

the bridges existing on the candidate routes; and

determine, based on the predicted bridge water level, a suitability of each of the candidate routes as the operation route.

BRIEF DESCRIPTION OF THE DRAWINGS

[FIG. 1] It is a schematic diagram of an operation support system.

[FIG. 2] It is a diagram illustrating a ship and a field-of-view of a lidar included in the operation support system.

[FIG. 3] FIG. 3A is a block diagram showing an example of a hardware configuration of an information processing device.

FIG. 3B is a block diagram showing an example of a hardware configuration of a server device.

[FIG. 4] It illustrates a map with clear indication of the departure point and destination of the ship and bridges existing in a river.

[FIG. 5] It is a bird's-eye view showing the surroundings of bridges existing on a certain candidate route.

[FIG. 6] FIG. 6A illustrates a graph indicative of the transition of the predicted water level at a water level prediction point.

FIG. 6B illustrates a graph indicative of the transition of predicted water level at the water level prediction point and a graph indicative of the transition of predicted bridge water level at a bridge passing point.

[FIG. 7] It is a rear view of the ship on the assumption that the ship exists at the bridge passing point.

[FIG. 8] It illustrates a table in which the expected passing time, predicted bridge water level, and predicted clearance are associated for each bridge.

[FIG. 9] It is an example of a functional block of a controller related to the operation route determination process.

[FIG. 10] It is an example of a flowchart of the operation route determination process.

[FIG. 11] It is a block diagram of an information processing device according to a second embodiment.

[FIG. 12] It is a bird's-eye view showing the surroundings of bridges existing on the operation route.

[FIG. 13] It is a rear view of the ship in a case where a registered feature is present within the measurement range of the lidar.

[FIG. 14] FIG. 14A illustrates time variation in the relation between the predicted water level and the measured water level at the point where the ship exists.

FIG. 14B is an example of a frequency distribution of plural water level difference values calculated during a most recent predetermined period.

[FIG. 15] It illustrates a table in which the expected passing time, corrected bridge water level, and predicted clearance are associated for each bridge existing on the operation route where the ship has not passed.

[FIG. 16] It illustrates an example of functional blocks of the predicted water level correction unit relating to the generation of the water level correction information according to a second embodiment.

[FIG. 17] It is an example of a flowchart showing the procedure of the generation process of the water level correction information in the second embodiment.

[FIG. 18] It is a block diagram of an information processing device according to a third embodiment.

[FIG. 19] It is a diagram showing the position of the ship in the three-dimensional Cartesian coordinate system.

[FIG. 20] It illustrates an example of a schematic data structure of voxel data.

[FIG. 21] It is an example of a functional block diagram of a self position estimation unit.

[FIG. 22] It illustrates a rear view of the ship.

[FIG. 23] FIG. 23A illustrates the time variation in the relation between the predicted water level and the measured water level at the point where the ship exists.

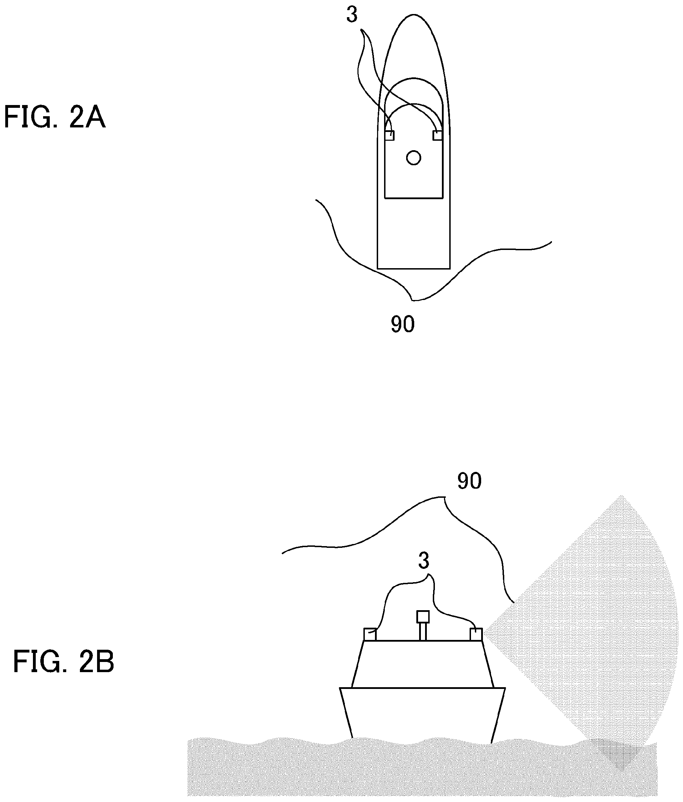

FIG. 2B illustrates an example of a frequency distribution of plural water level difference values calculated during a most recent predetermined period.

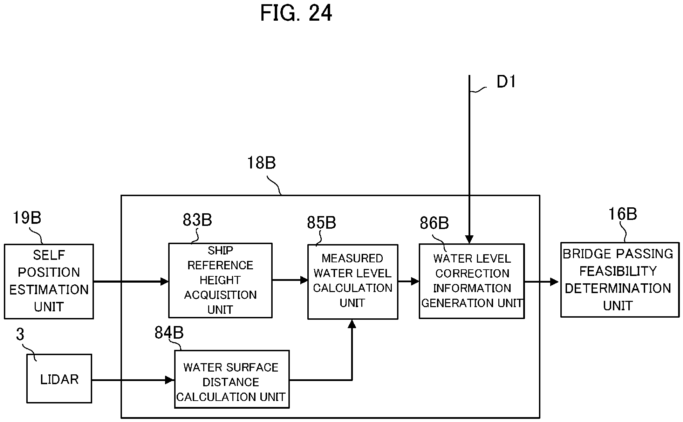

[FIG. 24] It is an example of a functional block diagram of the predicted water level correction unit relating to the generation of the water level correction information according to a third embodiment.

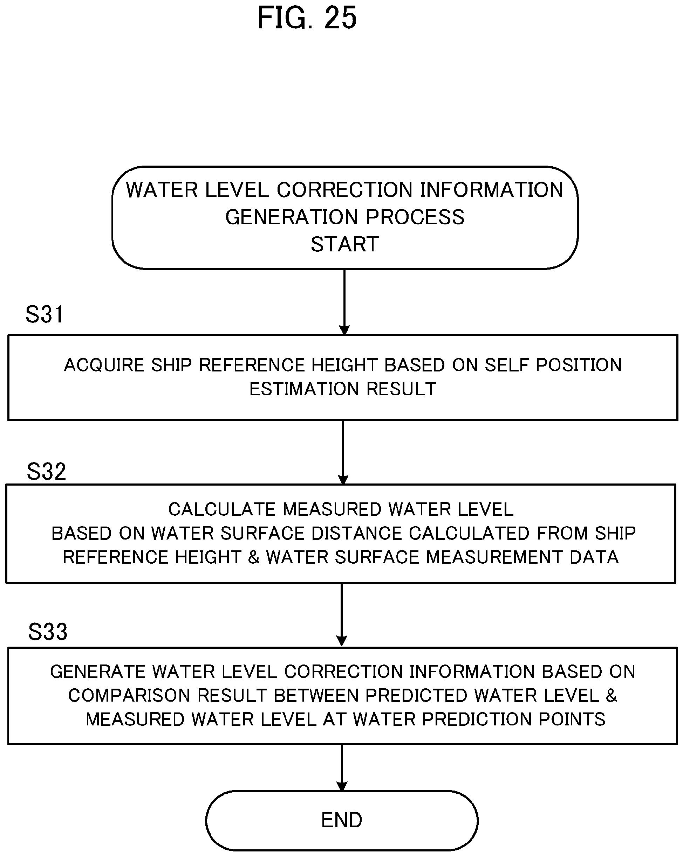

[FIG. 25] It is an example of a flowchart showing the procedure of the generation process of the water level correction information in the third embodiment.

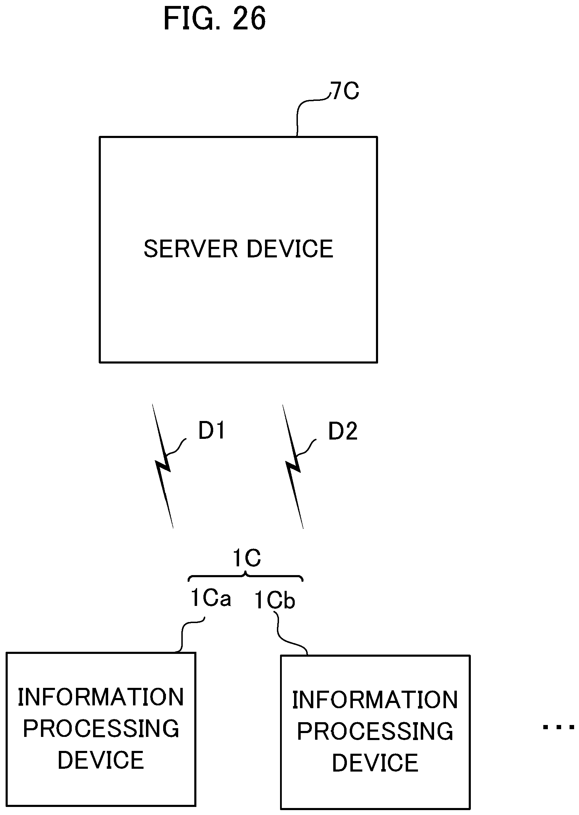

[FIG. 26] It is a schematic configuration of an operation support system according to a fourth embodiment.

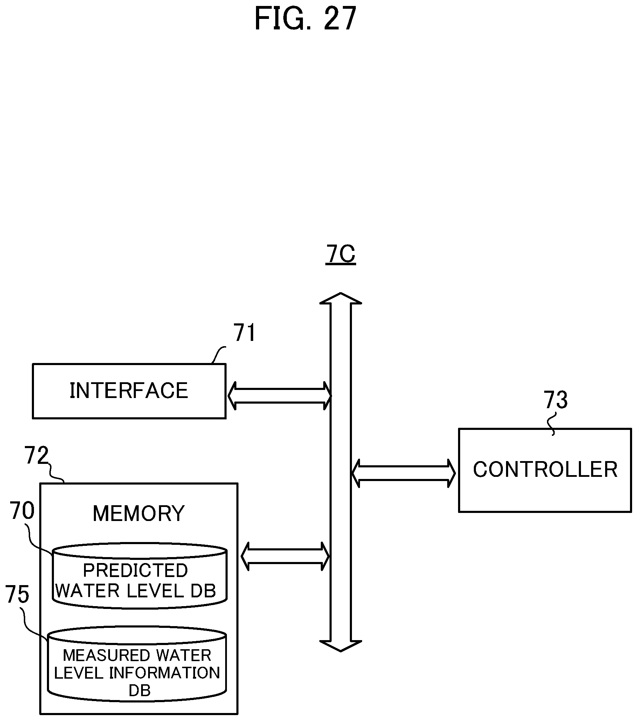

[FIG. 27] It is a block diagram showing an example of a hardware configuration of a server device according to the fourth embodiment.

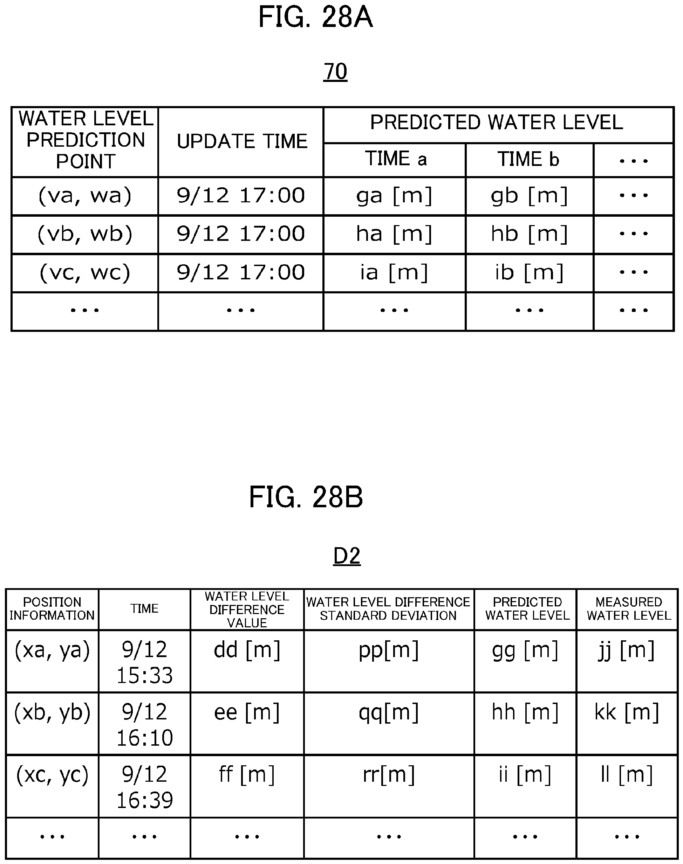

[FIG. 28] FIG. 28A is an example of the data structure of the predicted water level database.

FIG. 28B is an example of the data structure of the measured water level information.

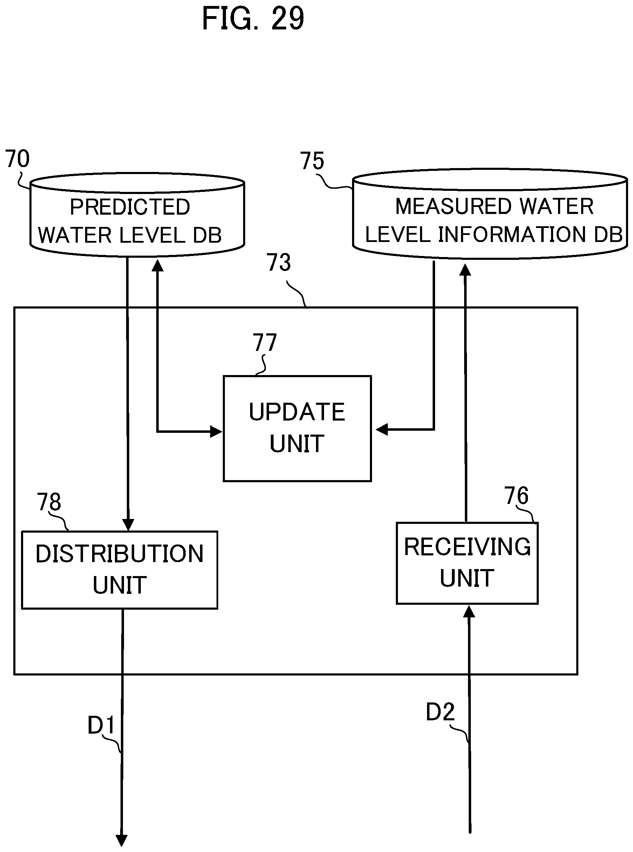

[FIG. 29] It is an example of a function block of the controller of the server device according to the fourth embodiment.

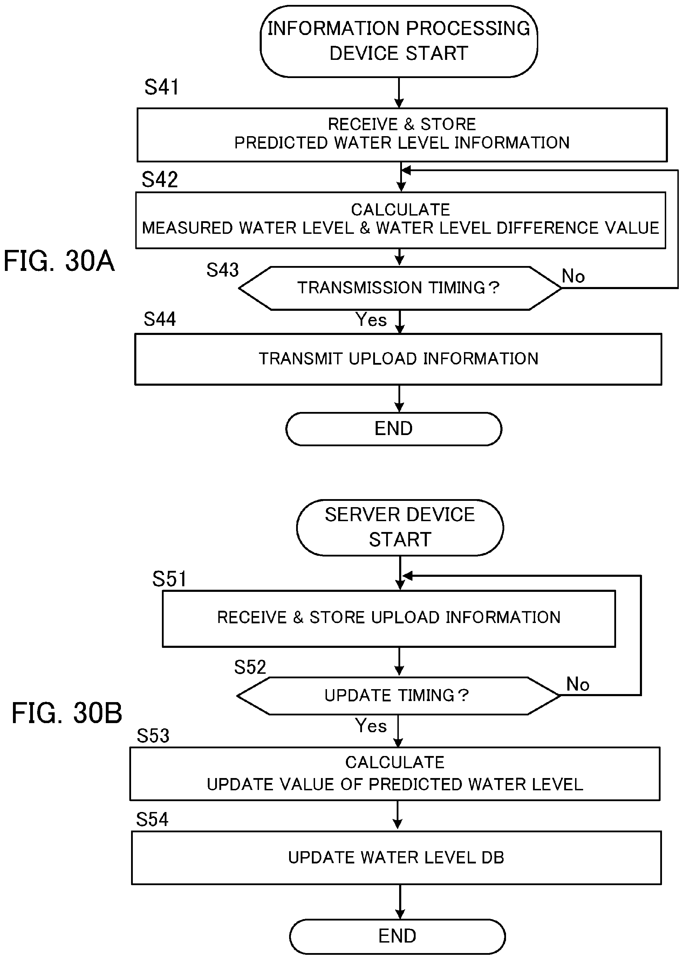

[FIG. 30] FIG. 30A is an example of a flowchart executed by the information processing device according to the third embodiment.

FIG. 30B is an example of a flowchart executed by the server device according to the third embodiment.

DETAILED DESCRIPTION OF PREFERRED EMBODIMENTS

According to a preferred embodiment of the present invention, the information processing device includes: a predicted water level information acquisition unit configured to acquire predicted water level information regarding predicted water levels at water level prediction points at which a water level is predicted on one or more candidate routes serving as candidates for an operation route of a ship; a predicted bridge water level calculation unit configured to calculate, based on the predicted water level information, a predicted bridge water level which is a predicted water level at an expected passing time when the ship passes each bridge passing point, which is a point of each of bridges passed by the ship, the bridges existing on the candidate routes; and a determination unit configured to determine, based on the predicted bridge water level, a suitability of each of the candidate routes as the operation route. According to this aspect, the information processing device accurately grasp the water level at the expected passing time of the ship for each bridge passing point existing on the candidate routes to suitably determine the suitability of each candidate route as the operation route.

In one aspect of the information processing device, the determination unit is configured to determine a passing feasibility under each of the bridges by the ship based on the predicted bridge water level and determine the suitability based on a determination result regarding the feasibility. According to this aspect, the information processing device can accurately determine the suitability of the candidate route as the operation route based on the determination result of the feasibility of passing by the ship under each bridge existing on the candidate routes.

In another aspect of the information processing device, the determination unit is configured to determine the passing feasibility based on a bridge height representing a height of each of the bridges based on map data and a ship highest point height representing a height of a highest point of the ship calculated based on the predicted bridge water level. According to this aspect, the information processing device can make a determination as to whether or not the ship can pass under the bridge in consideration of the position of the highest point of the ship at the bridge passing point.

In still another aspect of the information processing device, the information processing device further includes a ship highest point height calculation unit configured to calculate the ship highest point height based on water surface measurement data which is measurement data of a water surface measured by a measurement device provided on the ship, highest point information regarding a height from a reference position of the ship to the highest point of the ship and the predicted bridge water level. According to this aspect, the information processing device can accurately calculate the ship highest point height, which is the height of the highest point of the ship, by utilizing the predicted bridge water level.

In another aspect of the information processing device, the information processing device further includes an operation route determination unit configured to determine the operation route based on the determination result regarding the suitability. According to this aspect, the information processing device can determine an operation route through which a ship should pass. In some embodiments, the operation route determination unit is configured to display a screen image for selecting the operation route from the candidate routes determined to be suitable when the candidate routes determined to be suitable are plural.

In still another aspect of the information processing device, the information processing device further includes a candidate route acquisition unit configured to acquire a plurality of the candidate routes with different expected departure times, wherein the predicted bridge water level calculation unit is configured to calculate the expected passing time and the predicted bridge water level, based on the predicted water level information and the expected departure times of the candidate routes. According to this aspect, taking into account that the water level is changed by time, the information processing device can determine the suitability as each operation route of the candidate routes with different expected departure times.

In still another aspect of the information processing device, the predicted bridge water level calculation unit is configured to calculate the predicted bridge water level corresponding to the each bridge passing point, based on the predicted water level at water level prediction points nearest to the each bridge passing point in upstream and downstream directions of the river, respectively. According to this aspect, the information processing device can accurately calculate the predicted bridge water level at a bridge passing point from the predicted water levels at the water level prediction points.

According to another preferred embodiment of the present invention, there is provided a determination method executed by a computer, the determination method including: acquiring predicted water level information regarding predicted water levels at water level prediction points at which a water level is predicted on one or more candidate routes serving as candidates for an operation route of a ship; calculating, based on the predicted water level information, a predicted bridge water level which is a predicted water level at an expected passing time when the ship passes each bridge passing point, which is a point of each of bridges passed by the ship, the bridges existing on the candidate routes; and determining, based on the predicted bridge water level, a suitability of each of the candidate routes as the operation route. By executing this determination method, the computer can accurately determine whether or not the candidate route is suitable as an operation route.

According to still another preferred embodiment of the present invention, there is provided a program causing a computer to: acquire predicted water level information regarding predicted water levels at water level prediction points at which a water level is predicted on one or more candidate routes serving as candidates for an operation route of a ship; calculate, based on the predicted water level information, a predicted bridge water level which is a predicted water level at an expected passing time when the ship passes each bridge passing point, which is a point of each of bridges passed by the ship, the bridges existing on the candidate routes; and determine, based on the predicted bridge water level, a suitability of each of the candidate routes as the operation route. By executing this program, the computer can accurately determine whether or not a candidate route is suitable as an operation route. In some embodiments, the program is stored in a storage medium.

EMBODIMENTS

Hereinafter, preferred embodiments of the present invention are described below with reference to drawings.

<First Example>

(1-1) Outline of Operation Support System

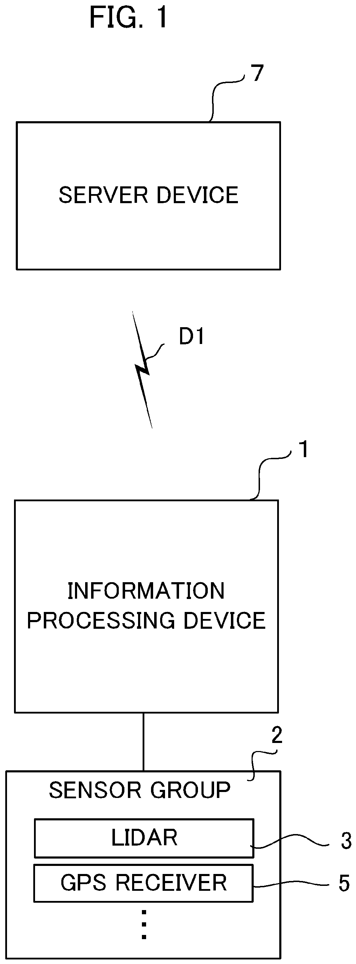

FIGS. 1, 2A and 2B are schematic configurations of an operation support system according to the first embodiment. Specifically, FIG. 1 shows a block configuration diagram of the operation support system, FIG. 2A is a top view illustrating the ship and the field of view (measurement range) 90 of the lidar 3 to be described later included in the operation support system, FIG. 2B is a rear view showing the ship and the field of view 90 of the lidar 3. The operation support system includes an information processing device 1 that moves together with a ship that is a moving body, a sensor group 2 mounted on the ship, and a server device 7.

The information processing device 1 is electrically connected to the sensor group 2 and supports the operation of a ship in which the information processing device 1 is provided based on the output from various sensors included in the sensor group 2 and the predicted water level information "D1" to be described later transmitted from the server device 7. In the present exemplary embodiment, the information processing device 1 determines the operation route of the ship by accurately determining in advance whether or not the ship can pass under the bridge. Examples of the operation support may include the support to get ashore such as autonomous docking. The information processing device 1 may be a navigation device provided on a ship or an electronic control device built in a ship.

The sensor group 2 includes various external and internal sensors provided on the ship. For example, the sensor group 2 in the present embodiment include the lidar (Lidar: Light Detection and Ranging, or Laser Illuminated Detection And Ranging) 3 and the GPS (Global Positioning Satellite) receiver 5. The sensor group 2 may include a GNSS receiver that generates the positioning result other than the GPS receiver 5. The information processing device 1 acquires the position of the ship on the river (waterway) required when referring to the river map database to be described later, from the GPS receiver 5 or the like.

The lidar 3 is an external sensor configured to emit pulse lasers within a predetermined angle range (see FIG. 2A) in the horizontal direction and within a predetermined angle range (see FIG. 2B) in the vertical direction (i.e., direction of angles of elevation and depression) and thereby discretely measures the distance to an object existing in the external space and generates three dimensional point cloud data indicative of the position of the object. In the example shown in FIG. 2A and FIG. 2B, as the lidar 3, there are provided in the ship a lidar directed to the left side direction of the ship and a lidar directed to the right side direction of the ship, respectively. The number of the lidars 3 installed in the ship is not limited to two and it may be one or may be three or more. In this case, the lidar 3 is equipped with a radiation unit for radiating a laser beam while changing the irradiation direction, a light receiving unit for receiving the reflected light (scattered light) of the radiated laser beam, and an output unit for outputting data based on the received light signal outputted by the light receiving unit. Each data measured for each irradiation direction of the pulsed laser is generated based on the irradiation direction corresponding to the laser beam received by the light receiving unit and the response delay time of the laser beam which is identified by the received light signal described above. It is noted that the lidar 3 is not limited to the above-described scan type lidar and may be a flash type lidar for generating three-dimensional data by diffusing and radiating laser beams into the field-of-view of a two-dimensional array sensor. The lidar 3 is an example of the "measurement device" in the present invention.

Further, in the present embodiment, the measurement range of the lidar 3 in the vertical direction at least includes the range (i.e., a range of direction in which the angle of elevation is positive) upper than the horizontal direction, and the range (i.e., the direction in which the angle of depression is positive) lower than the horizontal direction. Thus, the measurement range of the lidar 3 includes both a target bridge of passage by the ship and the water surface where the ship floats. In the case where there are plural lidars 3, the measurement range of at least one of the plural lidars 3 includes the range upper than the horizontal direction and the measurement range of at least one of the plural lidars 3 includes the range lower than the horizontal direction.

The server device 7 transmits the predicted water level information D1 representing predicted water levels (also referred to as "predicted water level"), as water levels in a predetermined time ahead at a plurality of points on the waterway, to the information processing device 1. Hereafter, each point (place) at which the predicted water level is calculated is also referred to as "water level prediction point". For example, upon receiving the request information including the present position of the information processing device 1 from the information processing device 1, the server device 7 transmits the predicted water level information D1 representing the predicted water levels at water level prediction points existing within a predetermined distance from the present position to the information processing device 1. In another example, upon receiving from the information processing device 1 information that specifies a river where the ship is passing or scheduled to pass, the information processing device 1 transmits the predicted water level information D1 regarding the water level prediction points on the specified river to the information processing device 1. It should be noted that the water level (height of the water surface) differs depending on the point of the river, and also that the temporal variation in the water level differs depending on the point of the river.

(1-2) Device Configuration

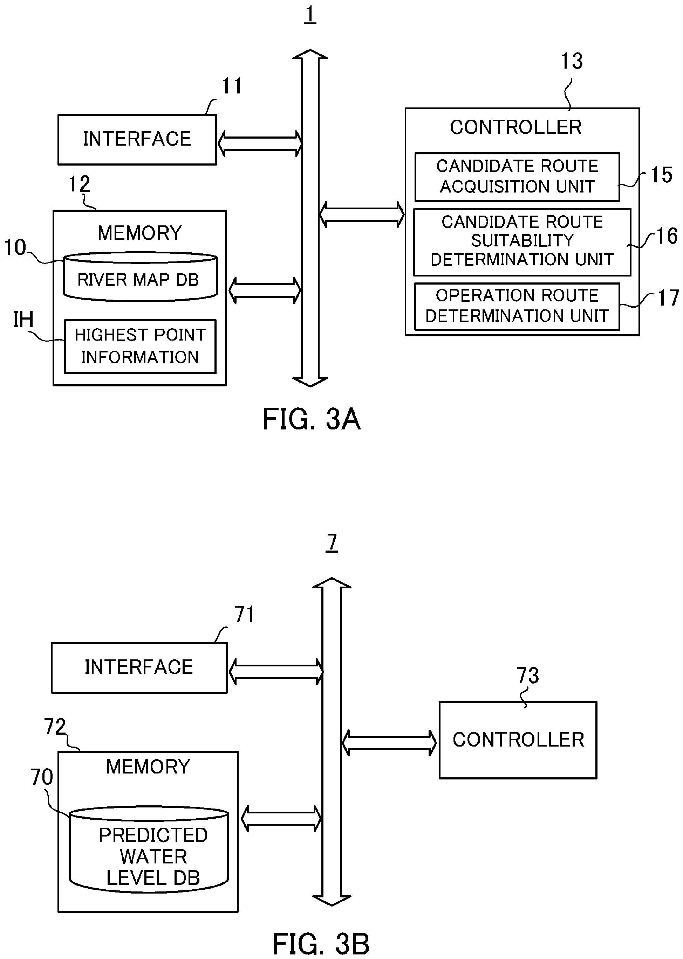

FIG. 3A is a block diagram illustrating an example of a hardware configuration of the information processing device 1. The information processing device 1 mainly includes an interface 11, a memory 12, and a controller 13. Each of these elements is connected to each other through a bus line.

The interface 11 performs the interface operation related to the transfer of data between the information processing device 1 and an external device. In this example, the interface 11 acquires the output data from the sensors of the sensor group 2 such as the lidar 3 and GPS receiver 5, and supplies the acquired data to the controller 13. The interface 11 receives the predicted water level information D1 from the server device 7 and supplies the predicted water level information D1 to the controllers 13. For example, the interface 11 also supplies signals relating to the control of the ship generated by the controller 13 to each component of the ship controlling the operation of the ship. For example, the ship includes a driving source such as an engine or an electric motor, a screw for generating a propulsive force in the traveling direction based on the driving force from the driving source, a thruster for generating a lateral propulsive force based on the driving force from the driving source, and a rudder which is a mechanism for controlling the traveling direction of the ship. Then, during an autonomous driving operation such as autonomous docking, the interface 11 supplies a control signal generated by the controller 13 to each of these components. In the case where an electronic control device is provided in the ship, the interface 11 supplies a control signal generated by the controller 13 to the electronic control device. Examples of the interface 11 include a wireless interface, such as a network adapter, for performing wireless communication, and a hardware interface, such as a cable, for connecting to an external device. The interface 11 may also perform interface operations with various peripheral devices such as an input device, a display device, and a sound output device.

The memory 12 is configured by various volatile and non-volatile memories such as a RAM (Random Access Memory), a ROM (Read Only Memory), a hard disk drive, and a flash memory. The memory 12 stores a program for the controller 13 to perform a predetermined process. The program executed by the controller 13 may be stored in a storage medium other than the memory 12.

The memory 12 also stores the river map database (DB: DataBase) 10 and the highest point information IH.

The river map DB 10 stores feature data that is data relating to features (landmarks) present on or near rivers (waterways). Examples of the features described above at least include bridges which are provided in waterways and which ships can pass. The feature data includes position information indicating the position where each feature is provided, and attribute information representing various attributes such as the type and size of each feature. The attribute information of the feature data corresponding to a bridge includes at least information regarding the height (e.g., altitude) of the girder bottom of the bridge (in other words, the height of the bottom surface of the bridge over the river).

In some embodiments, the river map DB 10 may further include information other than feature data, such as information on the docking location (including the shore and pier), information on waterways where the ship can move, and the like. The river map DB 10 may be stored in an external storage device of the information processing device 1 such as a hard disk connected to the information processing device 1 through the interface 11. The storage device may be a server device that communicates with the information processing device 1. Further, the storage device may be configured by a plurality of devices. The river map DB 10 may also be updated periodically. In this case, for example, from the server device that manages the map information, the controller 13 receives partial map information regarding the area to which the self position belongs via the interface 11, and reflects it in the river map DB 10.

The highest point information IH is information regarding the height of the highest portion (highest point) of the ship in the ship coordinate system, which is a coordinate system with respect to the ship. For example, the highest point information IH represents the height (i.e., distance in the height direction) of the highest point of the ship from a reference position (also referred to as "ship reference position") of the ship. In other words, the ship reference position is identical to the origin in the coordinate system to be adopted in the point cloud data outputted by the lidar 3 and corresponds to the installation position of the lidar 3, for example. The highest point information IH is generated based on the measurement result acquired beforehand, and is stored in advance in the memory 12.

In addition to the river map DB 10, the memory 12 stores information required for processing performed by the information processing device 1 in the present embodiment. For example, the memory 12 stores information to be used for setting the down-sampling size when down-sampling is applied to the point cloud data obtained in one cycle period of scanning by the lidar 3. In another example, the memory 12 stores information regarding candidate routes for the operation route to be passed by the ship.

The controller 13 includes one or more processors, such as a CPU (Central Processing Unit), a GPU (Graphics Processing Unit), and a TPU (Tensor Processing Unit), and controls the entire information processing unit 1. In this case, the controller 13 performs processing related to the operation support or the like by executing a program stored in the memory 12 or the like.

The controller 13 functionally includes a candidate route acquisition unit 15, a candidate route suitability determination unit 16, and an operation route determination unit 17.

The candidate route acquisition unit 15 acquires one or more routes (also referred to as "candidate routes") as candidates for the operation route of the ship. In this case, the candidate route acquisition unit 15 may generate the candidate routes based on the route search process, or may acquire the information representing the determined candidate routes from the memory 12 or from another device through the interface 11. When generating the candidate routes, for example, the candidate route acquisition unit 15 searches for routes on the waterway from the departure point to the destination as the candidate routes, based on the set of the departure point (which may be the current position) and the destination designated by the input data supplied from the input device through the interface 11. In this instance, the candidate route acquisition unit 15 searches for the candidate routes by referring to the river map DB 10 based on any route search method. In the generation process of the candidate routes, the determination as to whether or not the ship can pass under bridges existing on each route has not been made yet. Namely, each candidate route generated is not guaranteed regarding the feasibility of passing under bridges existing on each candidate route by the ship.

Based on the predicted water level information D1 received from the server device 7, the point cloud data generated by the lidar 3, the river map DB 10, and the highest point information IH, the candidate route suitability determination unit 16 makes a determination (also referred to as "bridge passing feasibility determination") of the feasibility of passing under each of bridges by the ship, wherein the bridges are provided on the candidate routes acquired by the candidate route acquisition unit 15. Details of the bridge passing feasibility determination will be described later.

The operation route determination unit 17 determines the operation route based on the result of the bridge passage feasibility determination by the candidate route suitability determination unit 16. In this case, the operation route determination unit 17 recognizes, as a candidate route (also referred to as "suitable candidate route") which is suitable for the operation route, a candidate route where it is determined that the ship can pass under all bridges provided. Then, the operation route determination unit 17 selects the operation route for operation of the ship from the recognized suitable candidate routes. If there are plural suitable candidate routes, the operation route determination unit 17 may select, as the operation route, the suitable candidate route with the shortest required time. In this case, the operation route determination unit 17 may cause a display unit through the interface 11 to display the plural suitable candidate routes in a selectable manner (i.e., display a selection view of the plural suitable candidate routes on the display unit) to thereby determine the operation route to be the suitable candidate route selected by an input unit from the displayed suitable candidate routes.

Then, the controller 13 in the first embodiment functions as the "predicted water level information acquisition unit", "candidate route acquisition unit", "predicted bridge water level calculation unit", "ship highest point height calculation unit", "determination unit", "operation route determination unit" and a computer configured to execute the program.

FIG. 3B is a block diagram illustrating an example of a hardware configuration of a server device. The server device mainly includes an interface 71, a memory 72, and a controller 73. Each of these elements is connected to each other through a bus line.

The interface 71 performs the interface operation related to the transfer of data between the server device and the external device. In this example, under the control of the controller 73, the interface 71 performs a process of transmitting the predicted water level information D1 to the information processing device 1. In this case, the interface 71 may be a wireless interface, such as a network adapter, for performing wireless communication, or a hardware interface for connecting to an external device, such as a cable. The interface 71 may also perform interface operation with various peripheral devices such as an input device, a display device, a sound output device, and the like.

The memory 72 is configured by a variety of volatile and non-volatile memories such as a RAM, a ROM, a hard disk drive, a flash memory, and the like. The memory 72 stores a program for the controller 73 to perform a predetermined process. The program executed by the controller 73 may be stored in a storage medium other than the memory 72.

The memory 72 also stores the predicted water level DB 70. The predicted water level DB 70 is a database which includes records of the predicted water levels at various water level prediction points on the waterway. In this case, for example, in the predicted water level DB 70, for each water level prediction point, the position information of the water level prediction point is associated with the predicted water level for each time (date and time) determined at the predetermined time intervals. It is noted that the predicted water level is determined by comprehensively taking into account the results of past measurements by a water gauge installed at the water level prediction point and the weather and atmospheric pressure up to the prediction time of the water level. In some embodiments, the predicted water level DB 70 may be stored in an external storage device of the server device 7 such as a hard disk connected through the interface 71 to the server device 7. The storage device may be a separated server device for communicating with the server device 7. Further, the storage device may be configured by a plurality of devices. The predicted water level DB 70 may also be updated periodically.

The controller 73 includes one or more processors, such as a CPU, a GPU, a TPU, to control the entire server device 7. In this instance, the controller 73 executes a program stored in the memory 72 or the like to perform a process related to distribution of the predicted water level information D1.

(1-3) Candidate Route Suitability Determination Process

Next, a process (also referred to as "candidate route suitability determination process") of determining a suitable candidate route will be described. For each bridge existing on the candidate routes, the candidate route suitability determination unit 16 calculates a predicted water level (also referred to as "predicted bridge water level") under each bridge at the expected passing time of the ship. Then, the candidate route suitability determination unit 16 determines whether or not the ship can pass under each bridge based on the predicted bridge water level, and determines, based on the determination result, whether or not each candidate route is a suitable candidate route.

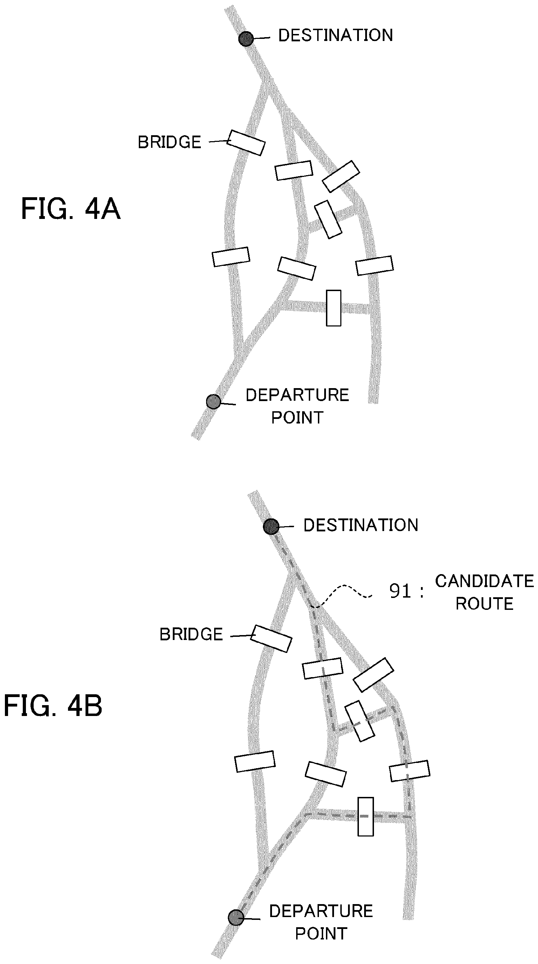

FIG. 4A is a map clearly showing the departure point of the ship and destination and the bridge existing in a river (waterway). FIG. 4B is a map further clarifying the candidate route 91 determined to be the suitable candidate route. In the examples shown in FIG. 4A and FIG. 4B, there are bridges on the route from the departure point to the destination, and there are multiple candidate routes due to the branching and merging of rivers. On the other hand, it is not always possible for the ship to pass through all bridges on the map. Therefore, the candidate route suitability determination unit 16 calculates, for each of the bridges existing on the candidate routes, the predicted bridge water level at the expected passing time of the ship, and determines whether or not the ship can pass under each bridge based on the calculated predicted bridge water level. In the examples shown in FIG. 4A and FIG. 4B, the candidate route suitability determination unit 16 determines that the ship can pass under all four bridges existing on the candidate route 91, based on the predicted bridge water levels of the four bridges. Thus, it determines that the candidate route 91 is a suitable candidate route.

If there are a plurality of candidate routes, the candidate route suitability determination unit 16 determines whether or not the ship can pass under each bridge existing on each of the candidate routes. Hereinafter, a description will be given of the method of calculating the predicted bridge water level, and then a description will be given of the method of determining the feasibility of passing a bridge using the predicted bridge water level.

(1-3-1) Calculation of Predicted Bridge Water Level

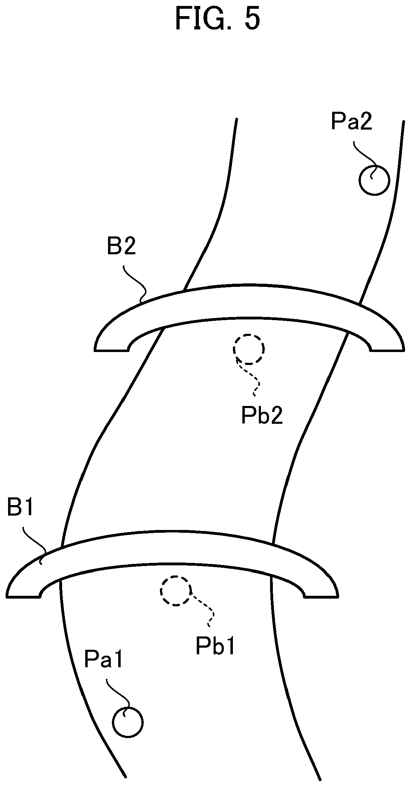

FIG. 5 is a bird's-eye view showing the periphery of the bridge B1 and the bridge B2 existing on a certain candidate route. Here, point "Pa1" is the water level prediction point closest to the bridge B1 and the bridge B2 in the river downstream direction, and point "Pa2" is the water level prediction point closest to the bridge B1 and the bridge B2 in the river upstream direction. In addition, the point "Pb1" is a point located directly below the bridge B1 on the target candidate route, and the point "Pb2" is a point located directly below the bridge B2 on the target candidate route. Here, each of the points Pb1 and Pb2 corresponds to a point (also referred to as "bridge passing point") under a bridge passed by a ship when the ship travels on the illustrated river.

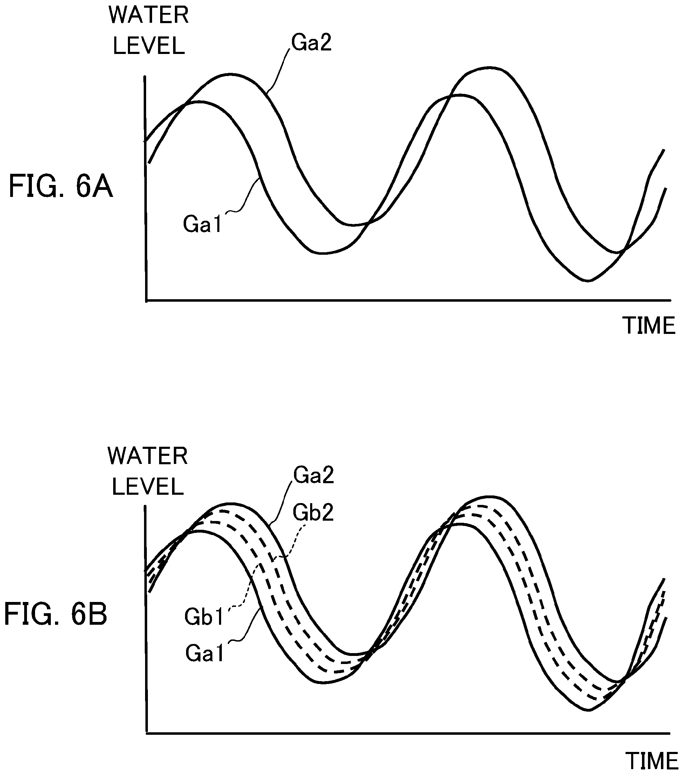

In this instance, the candidate route suitability determination unit 16 identifies the predicted water level in a time series at the water level prediction point Pa1 and the water level prediction point Pa2 nearest to the bridge B1 and the bridge B2 in the river upstream direction and in the river downstream direction, respectively, based on the predicted water level information D1. FIG. 6A shows the graph "Ga1" representing the transition of the predicted water level at the water level prediction point Pa1 and the graph "Ga2" representing the transition of the predicted water level at the water level prediction point Pa2. As shown in FIG. 6A, the water level differs depending on the location of the river, and the phase of the temporal variation in the water level differs depending on the location of the river.

Next, the candidate route suitability determination unit 16 calculates the predicted bridge water level in a time series at the bridge passing point Pb1 corresponding to the bridge B1 and at the bridge passing point Pb2 corresponding to the bridge B2, based on the predicted water level in a time series at the water level prediction point Pa1 and at the water level prediction point Pa2.

In this instance, for example, for each target time of prediction, the candidate route suitability determination unit 16 determines the predicted bridge water level at the bridge passing point Pb1 by linear interpolation based on: the distance between the water level prediction point Pa1 and the bridge passing point Pb1; the distance between the water level prediction point Pa2 and the bridge passing point Pb1; and each predicted water level at the water level prediction point Pa1 and the water level prediction point Pa2. Similarly, for each target time of prediction, the candidate route suitability determination unit 16 determines the predicted bridge water level at the bridge passing point Pb2 by interpolation (e.g., linear interpolation) based on: the distance between the water level prediction point Pa1 and the bridge passing point Pb2; the distance between the water level prediction point Pa2 and the bridge passing point Pb2; and each predicted water level at the water level prediction point Pa1 and the water level prediction point Pa2. FIG. 6B shows a graph "Gb1" representing the transition of the predicted bridge water level at the bridge passing point Pb1, and a graph "Gb2" representing the transition of the predicted bridge water level at the bridge passing point Pb2, together with the graph Ga1 and graph Ga2. As shown in FIG. 6B, the graph Gb1 showing the predicted bridge water level at the bridge passing point Pb1 close to the water level prediction point Pa1 is more similar to the graph Ga1 than to the graph Ga2, whereas the graph Gb2 showing the predicted bridge water level at the bridge passing point Pb2 close to the water level prediction point Pa2 is more similar to the graph Ga2 than to the graph Ga1.

The candidate route suitability determination unit 16 may calculate the predicted bridge water level at each bridge passing point using any method (for example, spline interpolation or polynomial approximation) other than the linear interpolation. In this case, the candidate route suitability determination unit 16 may calculate the predicted water level at a target bridge passing point based on the predicted water levels at three or more water level prediction points in the vicinity of the target bridge passing point.

Next, the candidate route suitability determination unit 16 determines the expected passing time, which is the time at which the ship is expected to pass through each bridge passing point on the assumption that the ship is operated according to the candidate route, and then recognizes the predicted bridge water level at the expected passing time for each bridge passing point. In this case, the candidate route suitability determination unit 16 predicts the time at which the ship passes through each bridge passing point on the assumption that the ship is operated according to the candidate route of interest on the basis of the expected departure time. In this case, for example, the candidate route suitability determination unit 16 calculates the expected time of passage at each bridge passing point, based on: the expected departure time; the assumed velocity of the ship; and the required operation distance from the departure point to each bridge passing point. For example, the candidate route suitability determination unit 16 recognizes the current time as the expected departure time if the ship is scheduled to depart immediately, and in other cases, it recognizes the time specified by the input data supplied from the input device through the interface 11 as the expected departure time. Then, for each bridge passing point, the candidate route suitability determination unit 16 reads the predicted bridge water level at the expected passing time from the predicted bridge water levels in the time series calculated by the interpolation.

As described above, the candidate route suitability determination unit 16 can accurately calculate the predicted bridge water level for each of the bridges existing on the candidate route based on the predicted water level information D1.

(1-3-2) Bridge Passing Feasibility Determination Based on Predicted Bridge Water Level

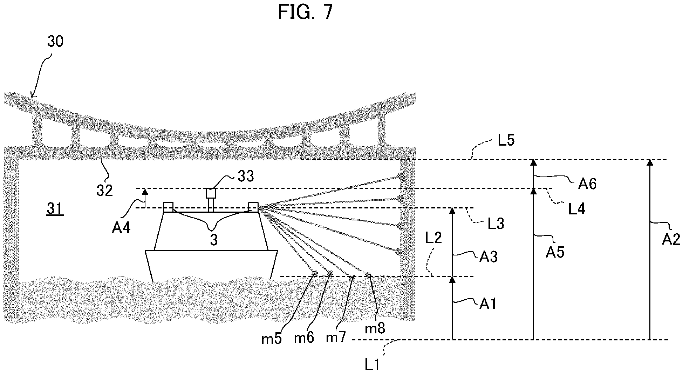

The candidate route suitability determination unit 16 predicts the clearance (also referred to as "predicted clearance") in the height direction between the ship and the bridge at the bridge passing point on the basis of the predicted bridge water level at the expected passing time, and determines whether or not each bridge can be passed through on the basis of the predicted clearance. A specific example of this process will be described with reference to FIG. 7.

FIG. 7 is a diagram showing an outline of a method of calculating the predicted clearance, and it is a diagram in which a ship is observed from the rear when it is assumed that the ship exists at a bridge passing point. In the example shown in FIG. 7, the ship is provided with two lidars 3, and the ship reference position is set to the position at the same height as the lidars 3. Further, in the ship, there is a projection portion 33 which is the highest point of the ship. Further, the bridge 30 is equipped with a girder bottom portion 32 which constitutes the bottom surface of the structural part located above the river, and forms an under-girder space 31 through which the ship can pass. The line L1 indicates the origin of the height (for example, altitude) adopted in the predicted bridge water level and the like, the line L2 indicates the water surface position, and the line L3 indicates the position with the same height as the ship reference position. Further, the line L4 indicates the position with the same height as the highest point of the ship, and the line L5 indicates the position with the same height as the girder bottom portion 32 forming the bottom surface of the bridge 30 on the river. Furthermore, the measured points "m5" to "m8" indicate measured points of the water surface measured by the lidars 3.

First, the candidate route suitability determination unit 16 extracts the feature data corresponding to the bridge 30 that the ship is planned to pass from the river map DB 10, and identifies the height (the height corresponding to the arrow A2, also referred to as "bridge height") of the bridge 30 by referring to the extracted feature data. The bridge height shall represent the height of the bottom of the bridge above the river (i.e., the height of the girder bottom). In addition, the predicted bridge water level at the bridge 30 has a height equivalent to the arrow A1.

Further, the candidate route suitability determination unit 16 calculates the distance (distance corresponding to the arrow A3, also referred to as "water surface distance") in the height direction between the ship reference position and the water surface, based on the point cloud data (also referred to as "water surface measurement data") generated by measuring the water surface by the lidars 3 at any timing before the operation route determination. In this case, from the point cloud data outputted by the lidars 3, the candidate route suitability determination unit 16 extracts the point cloud data below the horizontal plane (i.e., point cloud data in the direction in which the angle of depression is positive) as the water surface measurement data. In some embodiments, in order to obtain the water surface measurement data which does not include any detected points of places other than the water surface, such as bridge piers and quays and other ships, the candidate route suitability determination unit 16 may calculate the minimum value of the z-coordinate values of the point cloud data and then extract measured points whose z-coordinate values are close to the calculated minimum value. In FIG. 7, the candidate route suitability determination unit 16 uses the data corresponding to the measured points "m5" to "m8" of the water surface as the water surface measurement data and extracts the data from the point cloud data outputted by the lidars 3. Then, the candidate route suitability determination unit 16 calculates a representative value, such as the mean value and the lowest value, of the height-wise coordinate values of the extracted water surface measurement data as the water surface distance. In some embodiments, the candidate route suitability determination unit 16 calculates the water surface distance by plural times before the operation route determination, and then uses the mean value of the plural times calculation results of the water surface distance as the water surface distance in subsequent processing. Although only the measured points "m5" to "m8" of the lidar 3 provided on one side (right side side) in FIG. 7 is shown, the point cloud data of the lidars 3 provided on both sides (right side and left side) is used in reality.

Next, the candidate route suitability determination unit 16 specifies the height-wise width (see the arrow A4) between the ship reference position and the highest point with reference to the highest point information IH from the memory 12. Then, the candidate route suitability determination unit 16 calculates the height (height corresponding to the arrow A5, also referred to as "ship highest point height") of the highest point of the ship corresponding to the height obtained by adding the water surface distance (see the arrow A3) and the height-wise width (see the arrow A4) between the ship reference position and the highest point to the predicted bridge water level (see the arrow A1).

Then, the candidate route suitability determination unit 16 calculates the predicted clearance (see the arrow A6) to be the width obtained by subtracting the ship highest point height from the bridge height.

Thereafter, upon determining that the calculated predicted clearance is equal to or greater than a threshold value (also referred to as "predicted clearance threshold value Th"), the candidate route suitability determination unit 16 determines that the ship can pass through the bridge. Upon determining that the predicted clearance is less than the predicted clearance threshold value Th, the candidate route suitability determination unit 16 determines that the ship could not pass through the bridge safely. The predicted clearance threshold value Th may be defined as a fixed value stored in advance in the memory 12 or the like, or may be defined as a variable. In the latter case, for example, the candidate route suitability determination unit 16 may determine the predicted clearance threshold value Th based on an index (for example, a standard deviation) representing a variation in the height value of each data of the water surface measurement data used for calculation of the water surface distance. In this instance, for example, the candidate route suitability determination unit 16 increases the predicted clearance threshold value Th with an increase in the above-described standard deviation, in consideration of the fact that, with an increase in the wave height, the movement of the ship in the height direction increases and therefore the variation in the water surface measurement data also increases.

As described above, the candidate route suitability determination unit 16 can accurately perform the passage feasibility determination for each of the bridges existing on the candidate route, based on the predicted bridge water level, the point cloud data outputted by the lidars 3, and the map data related to the bridges.

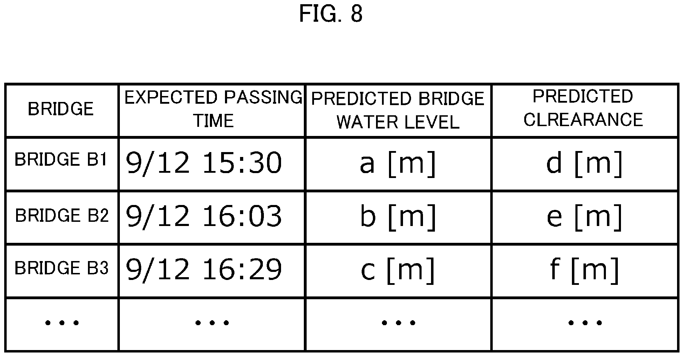

In some embodiments, the candidate route suitability determination unit 16 stores, in the memory 12 or the like, information in which the expected passing time, the predicted bridge water level, and predicted clearance are associated for each bridge existing on the candidate route. FIG. 8 shows a table in which the expected passing time, the predicted bridge water level, and predicted clearance are associated regarding each of the bridges (bridge B1, bridge B2, bridge B3, and so on) existing on the candidate routes. As shown in FIG. 8, the candidate route suitability determination unit 16 calculates the expected passing time, the predicted bridge water level, and the predicted clearance described above for all bridges (bridge B1, bridge B2, bridge B3, and so on) existing on the candidate route, and stores the results of the calculation in the memory12 or the like. In some embodiments, in the table described above, each bridge may be represented by position information or other identifiable information indicating the position of each bridge, in place of or in addition to the name of each bridge such as "bridge B1", "bridge B2", "bridge B3", and the like.

(1-4) Functional Blocks

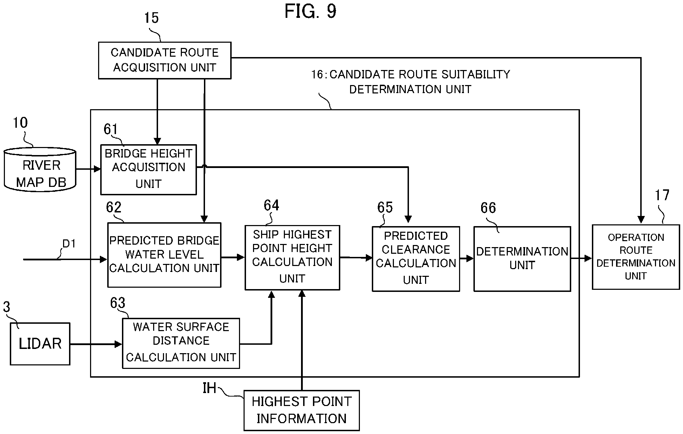

FIG. 9 is an example of a functional blocks of the controller 13 in the first embodiment. The candidate route suitability determination unit 16 functionally includes a bridge height acquisition unit 61, a predicted bridge water level calculation unit 62, a water surface distance calculation unit 63, a ship highest point height calculation unit 64, a predicted clearance calculation unit 65, and a determination unit 66. In FIG. 9, blocks to exchange data with each other are connected by a solid line, but the combination of blocks to exchange data with each other is not limited thereto. The same applies to other functional block diagrams described below.

First, the candidate route acquisition unit 15 acquires one or more candidate routes and supplies information regarding the acquired candidate routes to the bridge height acquisition unit 61, the predicted bridge water level calculation unit 62, and the operation route determination unit 17, respectively. The information regarding the candidate routes to be supplied from the candidate route acquisition unit 15 to the predicted bridge water level calculation unit 62 includes information (for example, information regarding the departure time) necessary for calculating the expected passing time of each bridge.

The bridge height acquisition unit 61 extracts the feature data corresponding to the bridges existing on the candidate routes from the river map DB 10, and acquires the bridge height of each bridge existing on the candidate routes based on the extracted feature data.

Further, based on the predicted water level information D1 received from the server device 7 through the interface 11 and the information on the candidate routes supplied from the candidate route acquisition unit 15, the predicted bridge water level calculation unit 62 calculates the expected time of passage and the predicted bridge water level at the bridge passing point corresponding to each bridge existing on the candidate routes. The water surface distance calculation unit 63 calculates the water surface distance based on the water surface measurement data obtained by measuring the water surface (i.e., downward from the horizontal direction).

The ship highest point height calculation unit 64 calculates the ship highest point height based on: the water surface distance calculated by the water surface distance calculation unit 63; the predicted bridge water level at the bridge passing point corresponding to each bridge existing on the candidate routes; and the height-wise width between the ship reference position and the highest point according to the highest point information IH.

The predicted clearance calculation unit 65 calculates the predicted clearance based on the bridge height acquired by the bridge height acquisition unit 61 and the ship highest point height calculated by the ship highest point height calculation unit 64. Further, the determination unit 66 determines the passage feasibility of each bridge on the candidate routes based on the predicted clearance of each bridge existing on the candidate routes and the predicted clearance threshold value Th. In this instance, the determination unit 66 may adaptively set the predicted clearance threshold value Th based on the water surface measurement data acquired by the water surface distance calculation unit 63. Then, the determination unit 66 determines that a candidate route where all bridges can be passed through by the ship is a suitable candidate route, and supplies the determination information on regarding suitable candidate route to the operation route determination unit 17.

The operation route determination unit 17 determines the operation route based on the information regarding the suitable candidate route supplied from the determination unit 66. In this case, if there is only one suitable candidate route, the operation route determination unit 17 selects the only one suitable candidate route as the operation route. On the other hand, if there are a plurality of suitable candidate routes, the operation route determination unit 17 may select a suitable candidate route with the shortest required time as the operation route or may select one of the operation routes based on an index other than the required time (e.g., the width of the river and the number of the operating ships). In another example, the operation route determination unit 17 may selectively display the suitable candidate routes on the display unit electrically connected through the interface 11 and select a suitable candidate route specified by the input data inputted from the input device operated by the user through the interface 11 as the operation route. In this instance, the operation route determination unit 17 refers to the river map DB 10, generates display information of a screen image in which the suitable candidate routes are superimposed on the map of the area including the departure point and the destination, and supplies the generated display information to the display device via the interface 11.

(1-5) Processing Flow

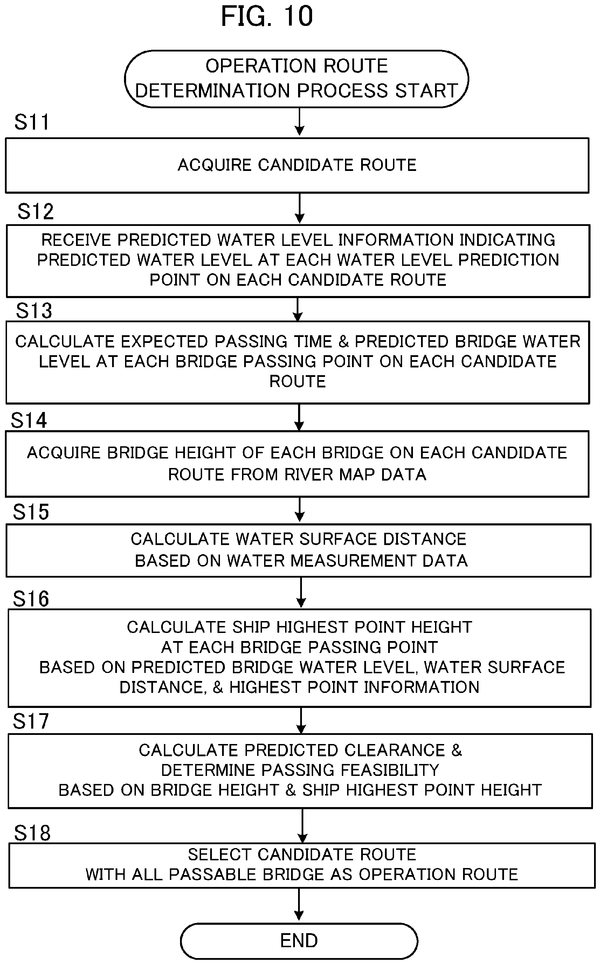

FIG. 10 is an example of a flowchart of a process for determining the operation route. The controller 13 executes the processing of the flowchart, for example, upon detecting a user input or the like instructing the determination of the operation route after the activation of the ship.

First, the candidate route acquisition unit 15 acquires the candidate routes (step S11). In this case, for example, the candidate route acquisition unit 15 searches for the candidate routes by performing the route search process based on the destination and the departure (or the current position) inputted by the input device operated by the user via the interface 11. In another example, the candidate route acquisition unit 15 may acquire the candidate routes by accepting the designation of the candidate routes from the input device through the interface 11. If the candidate routes are stored in the memory 12, it may acquire the candidate routes by reading the candidate routes from the memory 12.

Next, the candidate route suitability determination unit 16 receives the predicted water level information D1 indicating the predicted water level at each water level prediction point on each candidate route from the server device 7 (step S12). Then, based on the expected departure time and the predicted water level information D1 acquired at step S12, the candidate route suitability determination unit 16 calculates the expected passing time and the predicted bridge water level at each bridge passing point on each candidate route (step S13).

Then, the candidate route suitability determination unit 16 acquires the bridge height corresponding to each bridge on each candidate route from the river map DB 10 (step S14). Furthermore, the candidate route suitability determination unit 16 calculates the water surface distance based on the water surface measurement data which is the point cloud data obtained by measuring downward (i.e., the direction in which the angle of depression is positive) by the lidar 3 (step S15). The candidate route suitability determination unit 16 may use a representative value such as the mean value of the plural calculation results of the water surface distance obtained by executing the process at step S15 a plurality of times, as the value of the water surface distance in the subsequent processing. The processes at step S11 to step S15 may be performed in any order.

Then, for each of the bridges on each candidate route, the candidate route suitability determination unit 16 calculates the highest ship point height at each bridge passing point on the basis of the predicted bridge water level, the water surface distance, and the highest point information IH (step S16). Then, for each bridge on each candidate route, the candidate route suitability determination unit 16 calculates the predicted clearance based on the bridge height and the ship highest point height, and determines whether or not the ship can pass under each bridge on each candidate route based on the predicted clearance (step S17). Then, the operation route determination unit 17 selects the suitable candidate route, which is a candidate route with all passable bridges by the ship, as the operation route based on the determination result by the candidate route suitability determination unit 16 at step S17 (step S18).

(1-6) Modifications

Hereinafter, a description will be given of a preferred modification to the above-described embodiment. The following modifications may be applied to the embodiment in combination.

The candidate route acquisition unit 15 may generate a plurality of candidate routes having the same route with different departure times.

For example, at step S11 in the flowchart shown in FIG. 10, if there are N routes (N is an integer of 1 or more) from the departure point to the destination, the candidate route acquisition unit 15 generates, as the candidate routes, M routes whose starting times are set at predetermined time intervals (e.g., 30 minutes) for each of N routes. In this case, N by M candidate routes are generated. In this instance, at step S13, for each candidate route, the candidate route suitability determination unit 16 calculates the expected passing time and the estimated bridge water level at each bridge passing point. Even if candidate routes are different in only the departure times, the expected passing times and the predicted bridge water levels at each bridge passing point are different, respectively. Then, the processes other than the processes at step S11 and step S13 described above are executed in the same manner as the above-described embodiment.

According to this modification, the information processing device 1 can increase the candidate routes and determine a suitable operation route.

As described above, the controller 13 of the information processing device 1 according to the first embodiment acquires predicted water level information D1 regarding a predicted water level at water level prediction points subjected to prediction of a water level on one or more candidate routes serving as candidates for an operation route of a ship. Then, the controllers 13 calculate, based on the predicted water level information D1, a predicted bridge water level which is a predicted water level at an expected passing time when the ship passes each bridge passing point, which is a point of each bridge passed by the ship existing on the candidate routes. Then, the controller 13 determines the suitability of each of the candidate routes as the operation route, based on the predicted bridge water level. Thus, the information processing device 1 can accurately grasp the water level at the expected passing time of the ship for each bridge passing point existing on the candidate routes, and suitably determine whether or not each candidate route is suitable as the operation route.

<Second Embodiment>

The information processing device 1 according to the second embodiment measures the water level at each water level prediction point at which the ship passes after the start of the operation of the ship according to the determined operation route, and then generates correction information for the predicted water level provided by the server device 7, based on the difference between the measured water level and the predicted water level. Thus, the information processing device 1 accurately makes a determination (e.g., the final confirmation as to whether or not the ship can actually pass) of whether or not the ship can pass under each bridge that has not been passed through yet on the operation route. Hereinafter, the same components as in the first embodiment are appropriately denoted by the same reference numerals, and a description thereof will be omitted.

(2-1) Block Configuration

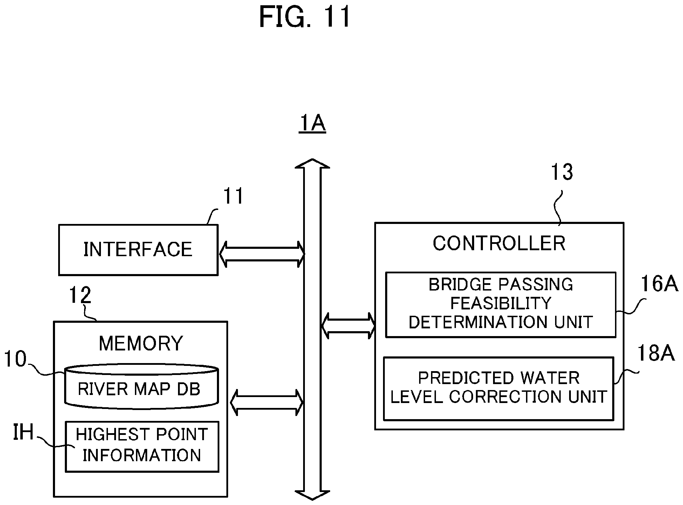

FIG. 11 is a block diagram of an information processing device 1A according to a second embodiment. As shown, the information processing device 1A includes an interface 11, a memory 12, and a controller 13.
The memory 12 stores the river map DB 10 and the highest point information IH described in the first embodiment. In addition, the river map DB 10 may include feature data related to any features (landmarks) other than bridges whose height (e.g., altitude) is known. This feature data includes at least information regarding the position of each feature and the height of each feature (e.g., altitude). Hereafter, the features (including bridges) in which features are registered in the river map DB 10 are also referred to as "registered features".
The controller 13 functionally includes a bridge passage feasibility determination unit 16A and a predicted water level correction unit 18A.
The bridge passage feasibility determination unit 16A makes the feasibility determination of passing under each bridge existing on the determined operation route. In addition, if the water level correction information is supplied from the predicted water level correction unit 18A to be described later, the bridge passage feasibility determination unit 16A corrects the predicted water level at each water level prediction point on the operation route based on the water level correction information and makes the feasibility determination of ship's passing under each bridge existing on the operation route based on the predicted water level after the correction.
The predicted water level correction unit 18A generates water level correction information for correcting the predicted water level at each water level prediction point indicated by the predicted water level information D1 received from the server device 7, and supplies the generated water level correction information to the bridge passage feasibility determination unit 16A.
Then, the controller 13 according to the second embodiment functions as a "ship reference height calculation unit", "measured water level calculation unit", "correction information generation unit", "bridge water level calculation unit", "bridge passage feasibility determination unit" and a computer configured to execute the program.
The information processing device 1A may execute the processing relating to the determination of the operation route described in the first embodiment, or may not execute the processing. In the latter case, for example, the information processing device 1A stores the operation route information regarding the operation route in the memory 12 or the like in advance, and supports the operation of the ship based on the operation route recognized by referring to the operation route information. In this instance, the information processing device 1A may determine the operation route based on the input data that specifies the operation route, which is supplied from the input device operated by the user via the interface 11.

(2-2) Generation of Water Level Correction Information

Next, the generation process of the water level correction data by the predicted water level correction unit 18A will be described. In summary, the predicted water level correction unit 18A calculates the height (referred to as "ship reference height") of the ship reference position, on the basis of data obtained by measuring a registered feature by the lidar 3 on the operation route. Then, the predicted water level correction unit 18A generates the water level correction information based on the comparison result between the water level, which is calculated based on the water surface distance and the ship reference height, and the predicted water level according to the predicted water level information D1. The water level calculated based on the water surface distance and the ship reference height corresponds to the water level calculated based on the data obtained by measuring the registered feature by the lidar 3, and is hereinafter also referred to as "measured water level".

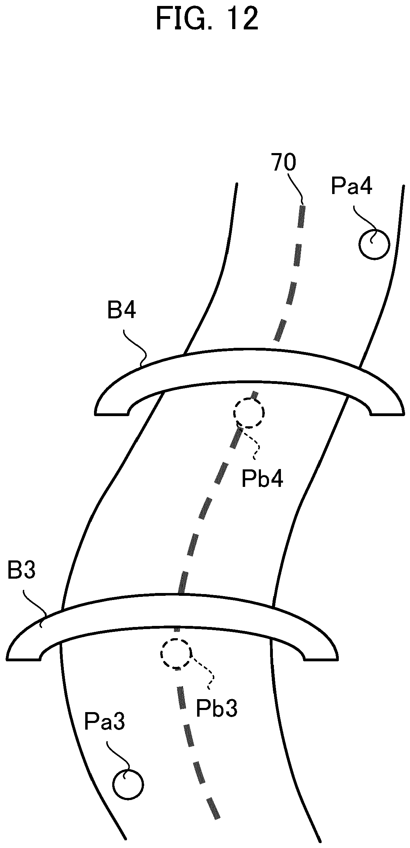

FIG. 12 is a bird's-eye view showing the periphery of the bridge B3 and the bridge B4 existing on the operation route. Here, point "Pa3" is the water level prediction point closest to the bridge B3 and the bridge B4 in the river downstream direction, and point "Pa4" is the water level prediction point closest to the bridge B3 and the bridge B4 in the river upstream direction. The point "Pb3" and the point "Pb4" are the points (also referred to as "water level measurement points") for calculating the ship reference height and the measured water level. The dashed line 70 indicates the operation route.

First, the calculation of the ship reference height and the measured water level at the water level measurement point Pb3 will be explained. At the time when a ship exists at the point Pb3, the predicted water level correction unit 18A recognizes that the bridge B3 that is a registered feature exists within the measurement range of the lidar 3 based on the position information of the ship generated based on the GPS receiver 5 and the position information of registered features included in the river map DB 10. Then, the predicted water level correction unit 18A extracts data (also referred to as "feature measurement data") obtained by measuring the registered feature (the bridge B3 in this case) from the point cloud data generated by the lidar 3, and calculates the ship reference height based on the extracted feature measurement data.

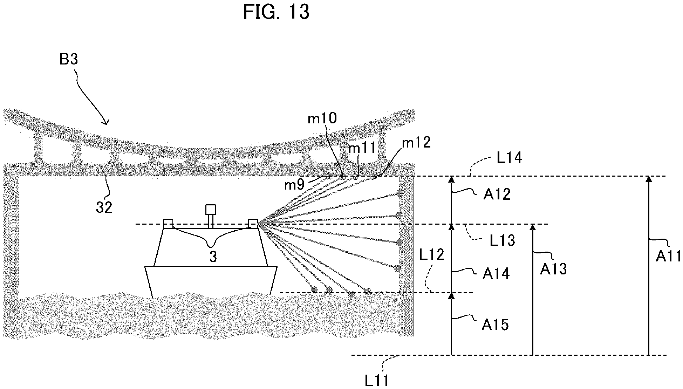

FIG. 13 is a rear view of the ship when a bridge B3 that is a registered feature exists within the measurement range of the lidar 3. The line L11 indicates the origin of the height (for example, altitude) adopted in the bridge forecast water level and the like, the line L12 indicates the water surface position, and the line L13 indicates the position with the same height as the ship reference position. In addition, the line L14 indicates the position with the same height as the height of the registered feature (in this case, the bridge B3) registered in the river map DB 10. Furthermore, the measured points "m9" to "m12" indicate the measured points of the registered feature (in this case, bridge B3) measured by the lidar 3.

In this case, for example, if the distance between the present position of the ship and the position (in detail the position of a registered feature registered in the river map DB 10) of a registered feature (in this case the bridge B3) is within the max ranging distance of the lidar 3, the predicted water level correction unit 18A extracts, as the feature measurement data, point cloud data above the horizontal plane (i.e. the direction in which the angle of elevation is positive) from the point cloud data outputted by the lidar 3. In some embodiments, in order to obtain the feature measurement data which does not include any detected points of places other than the registered feature, such as bridge piers and quay, the predicted water level correction unit 18A may calculate the maximum value of the z-coordinate values of the point cloud data and then extract measured points whose z-coordinate values are close to the calculated maximum value. In FIG. 13, the predicted water level correction unit 18A uses the data corresponding to the measured points m9 to m12 of the girder bottom portion 32 as the feature measurement data and extracts the data from the point cloud data generated by the lidar 3. Then, the predicted water level correction unit 18A calculates a representative value, such as the mean value and the lowest value, of the height-wise coordinate values of the extracted feature measurement data as the distance (distance corresponding to the arrow A12, also referred to as the "feature distance") in the height direction between the registered feature (the bridge B3 in this case) and the ship reference position. Then, the predicted water level correction unit 18A recognizes the height (height corresponding to the arrow A11, also referred to as "feature height") of the target registered feature according to the river map DB 10, and calculate the ship reference height which is the height corresponding to the arrow A13 by subtracting the feature distance from the recognized feature height. When the registered feature is a bridge, the feature height represents the bridge height.

Next, the predicted water level correction unit 18A calculates the measured water level at the water level measurement point Pb3 based on the above-mentioned ship reference height based on the feature measurement data obtained at the water level measurement point Pb3 and the water level measurement data obtained at the water level measurement point Pb3. In this instance, the predicted water level correction unit 18A calculates the water level distance which is the distance corresponding to the arrow A14 based on the water level measurement data, and then calculates the measured water level which is the height corresponding to the arrow A15 by subtracting the water level distance from the ship reference height.

Then, the predicted water level correction unit 18A calculates the ship reference height and the measured water level at the water level measurement point Pb4 according to the same processing as the processing for the water level measurement point Pb3.

Next, the predicted water level correction unit 18A calculates a continuous-valued measured water level (also referred to as "interpolated measured water level") along the route in which the ship has passed by performing any interpolation processing using the measured water levels at the water level measurement points (that is, the water level measurement points at which the measured water level has already been calculated) through which the ship has already passed including the water level measurement point Pb3 and the water level measurement point Pb4. In this situation, the predicted water level correction unit 18A may calculate the interpolated measured water level, that is continuous-valued, along the operation route that the ship has passed, based on any interpolation technique such as linear interpolation, spline interpolation, and polynomial approximation. Further, in this case, if model information indicating a model representing the water level along the operation route is stored in advance in the memory 12 or the like, it may fit the model to the measured water levels at the water level measurement points to the model to thereby determine the parameters of the model. In this situation, the predicted water level correction unit 18A recognizes the interpolated measured water level at any point on the operation route based on the model to which the determined parameters are applied. In some embodiments, the model information described above may be generated in advance for each river, or may be generated in advance for each section of the rivers. The model information may be a part of the river map DB 10.

Every time passing through a water level prediction point, the predicted water level correction unit 18A compares the predicted water level at the water level prediction point subjected to passage with the interpolated measured water level, and calculates the difference value (also referred to as "water level difference value") between the predicted water level and the interpolated measured water level. Hereafter, for convenience, the water level difference value shall be a value obtained by subtracting the predicted water level from the measured water level (i.e., "water level difference value" = "interpolated measured water level" - "predicted water level"). Then, the predicted water level correction unit 18A calculates a representative value, such as the mean value, of the water level difference values at a plurality of water level prediction points that the ship has passed through, and calculates the calculated mean value or the like as the correction amount for the predicted bridge water level.

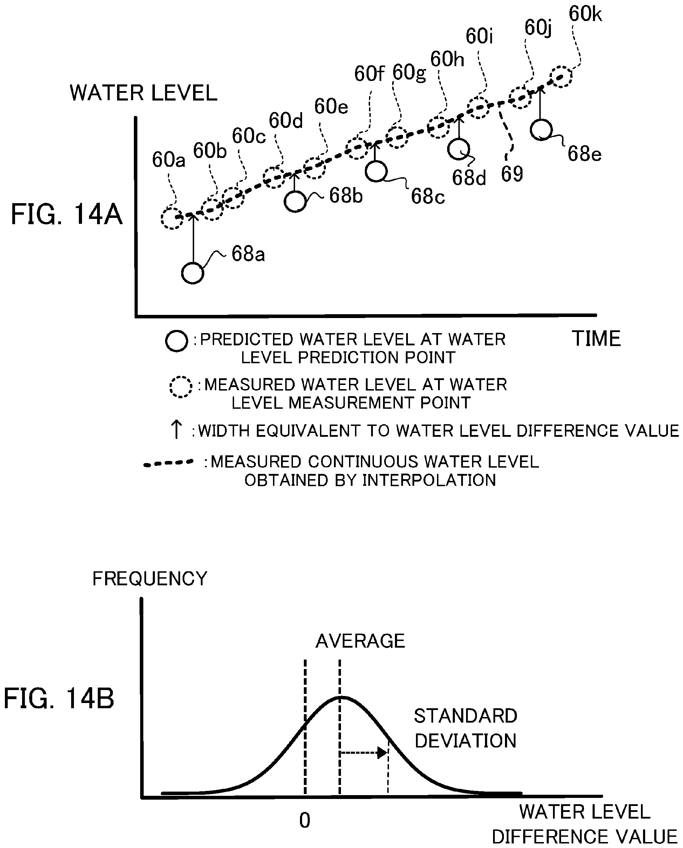

FIG. 14A shows the time variation in the predicted water level and measured water level at a point where the ship is located. Here, the dashed circles 60a to 60k each represents the measured water level at each water level measurement point where the ship passed, and the solid circles 68a to 68e each represents the predicted water level at each water level prediction point where the ship passed. Further, the graph 69 is a graph showing the interpolated measured water level generated by interpolating the measured water levels indicated by the dashed circles 60a to 60k. In addition, arrows corresponding to the solid circles 68a to 68e each indicates a width corresponding to the water level difference value.

As shown in FIG. 14A, the predicted water level correction unit 18A calculates the continuously-interpolated measured water level on the already passed operation route by interpolation, and calculates the water level difference value corresponding to the difference between the interpolated measured water level and the predicted water level at each water level prediction point that has already passed. In the embodiment shown in FIG. 14A, the predicted water level correction unit 18A calculates the water level difference values at five points corresponding to the solid circles 68a to 68e.

FIG. 14B is an example of a distribution representing the frequency (i.e., number of times) of plural water level difference values calculated within a most recent predetermined period. The predicted water level correction unit 18A sums up the water level difference values calculated for each water level prediction point that has already passed, and calculates statistics of the water level difference values such as the mean (average) and the standard deviation. Then, the predicted water level correction unit 18A supplies the calculated mean and standard deviation of the water level difference values to the bridge passage feasibility determination unit 16A as the water level correction information required for correction of the predicted bridge water level.

Thereafter, the bridge passage feasibility determination unit 16A corrects the predicted water level at each water level prediction point on the operation route based on the water level correction information received from the predicted water level correction unit 18A. Then, in the same way as the predicted bridge water level calculation unit 62 does in the first embodiment, the bridge passage feasibility determination unit 16A calculates the expected passing time and the bridge water level at each bridge passing point in the operation route where the ship has not passed yet, based on the predicted water level after the correction (i.e., the sum of the predicted water level before correction and the averaged water level difference value). Hereafter, the predicted bridge water level calculated based on the predicted water level after correction is also referred to as "corrected bridge water level". Then, the bridge passage feasibility determination unit 16A calculates the ship highest point height based on the water surface distance, the bridge correction water level, and the highest point information IH in the same way as the ship highest point height calculation unit 64 does, and further calculates the predicted clearance from the ship highest point height in the same way as the predicted clearance calculation unit 65 does.

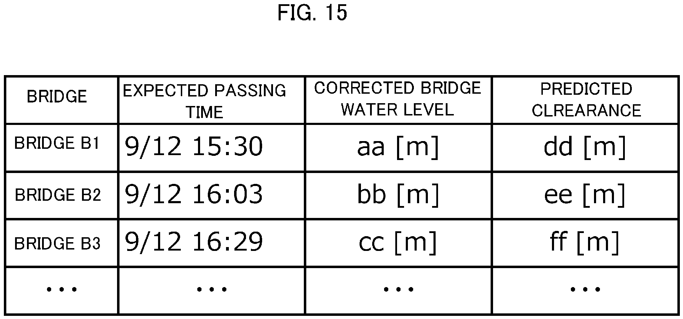

In some embodiments, the bridge passage feasibility determination unit 16A stores, in the memories 12 and the like, information in which the calculated expected passing time, the bridge correction water level, and the predicted clearance are associated for each bridge existing on the operation route where the ship has not passed yet. FIG. 15 shows a table in which the expected passing time, the bridge correction water level, and the predicted clearance are associated for each bridge (bridge B5, bridge B6, bridge B7, and so on) existing on the operation route where the ship has not passed yet. As shown in FIG. 15, the bridge passage feasibility determination unit 16A calculates the expected passing time, the bridge correction water level, and the predicted clearance for all bridges (bridge B5, bridge B6, bridge B7, and so on) existing on the operation route where the ship has not passed yet, and then stores the calculation result in the memory 12.

(2-3) Functional Blocks

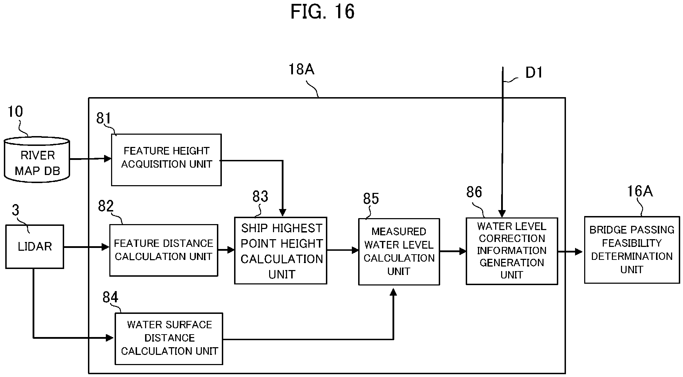

FIG. 16 is an example of the functional blocks of the predicted water level correction unit 18A related to the generation of the water level correction information in the second embodiment. The predicted water level correction unit 18A functionally includes a feature height acquisition unit 81, a feature distance calculation unit 82, a ship reference height calculation unit 83, a water surface distance calculation unit 84, a measured water level calculation unit 85, and a water level correction information generation unit 86.

The feature height acquisition unit 81 acquires the feature information corresponding to a registered feature existing within a predetermined distance from the ship from the river map DB 10, and acquires the feature height included in the feature information. In this instance, the feature height acquisition unit 81 identifies the above-described registered feature based on the present position information based on the GPS receiver 5 or the like and the position information included in the feature information.

The feature distance calculation unit 82 extracts the feature measurement data corresponding to the registered feature from the point cloud data outputted by the lidar 3 and calculates the feature distance based on the extracted feature measurement data. The point (location) at which the feature measurement data is generated corresponds to the water level measurement point.

The ship reference height calculation unit 83 calculates the ship reference height based on the feature height acquired by the feature height acquisition unit 81 and the feature distance calculated by the feature distance calculation unit 82.

The water surface distance calculation unit 84 extracts the water surface measurement data obtained by measuring the water surface from the point cloud data outputted by the lidar 3, and calculates the water surface distance based on the extracted water surface measurement data. The measured water level calculation unit 85 calculates the measured water level at each water level measurement point based on the ship reference height calculated by the ship reference height calculation unit 83 and the water surface distance calculated by the water surface distance calculation unit 84. Furthermore, based on the measured water levels at the water level measurement points calculated in the past, the measurement water level calculation unit 85 calculates the continuously-interpolated measured water level along the operation route from the departure point to the present (in detail, up to the most recent calculation time of the measured water level).

The water level correction information generation unit 86 calculates the water level difference values by comparing the predicted water level with the interpolated measured water level at each water level prediction point where the ship already passed, based on the continuously-interpolated measured water level calculated by the measured water level calculation unit 85 and the predicted water level information D1. Then, the water level correction information generation unit 86 generates water level correction information including the mean value or any other statistic of the water level difference values at the water level prediction points that the ship has already passed and supplies the generated water level correction information to the bridge passage feasibility determination unit 16A.

(2-4) Processing Flow

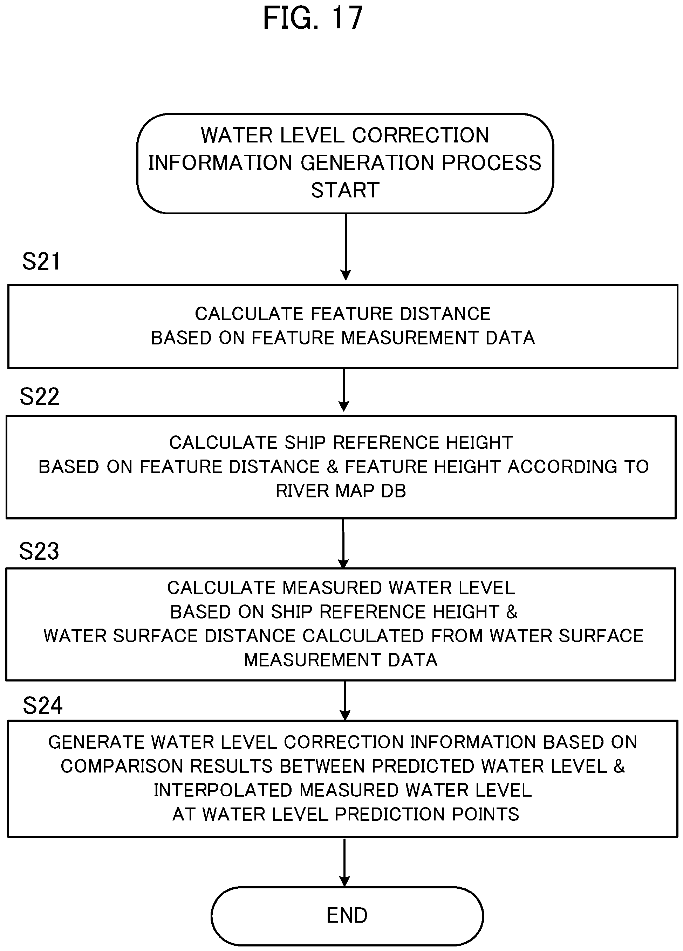

FIG. 17 is an example of a flowchart illustrating a process of generating water level correction information that is executed by the predicted water level correction unit 18A in the second embodiment. The predicted water level correction unit 18A repeatedly executes the process of the flowchart.

First, if a registered feature exists within the measurement range of the lidar 3, the predicted water level correction unit 18A calculates the feature distance based on the feature measurement data extracted from the point cloud data generated by the lidar 3 (step S21). Then, the predicted water level correction unit 18A calculates the ship reference height based on the feature distance calculated at step S21 and the feature height according to the river map DB 10 (step S22).

Then, the predicted water level correction unit 18A calculates the measured water level based on the ship reference height and the water surface distance calculated from the water surface measurement data extracted from the point cloud data generated by the lidar (step S23). In this case, the predicted water level correction unit 18A at least calculates the interpolated measured water levels at the water level prediction points by the interpolation process or the like.

Then, the predicted water level correction unit 18A generates the water level correction information based on a comparison result between the predicted water levels at water level prediction points where the ship already passed and the interpolated measured water levels at the water level prediction points (step S24).

As described above, the controller 13 of the information processing device 1A according to the second embodiment calculates the ship reference height which is the height of the reference position of the ship based on the measurement data of a feature measured by the lidar 3 provided on the ship. Then, the controller 13 calculates a measured water level representing the height of the water surface, based on the water surface measurement data, which is the measurement data of the water surface measured by the lidar 3, and the ship reference height. Then, the controller 13 generates water level correction information relating to the predicted water level information, based on predicted water levels according to the predicted water level information and the measured water levels calculated at respective closest points to water level prediction points corresponding to predicted water levels, wherein the predicted water level information represents predicted water levels at the water level prediction points in the river. Thus, the information processing device 1A can estimate the water level at each bridge point on the operation route. Thus, even in a manner that a highly accurate self position estimation with respect to the height direction is not performed, it is possible to generate water level correction information for correcting the predicted water level with high accuracy, accurately making a re-determination as to feasibility of passing under each bridge by the ship that has not passed yet on the operation route subjected to water level prediction.

<Third Embodiment>

The information processing device 1 according to the third embodiment is different from the second embodiment in that it acquires the ship reference height by executing a highly accurate self position estimation process including the height direction. Hereinafter, the same components as in the second embodiment are appropriately denoted by the same reference numerals, and a description thereof will be omitted.

(3-1) Block Configuration

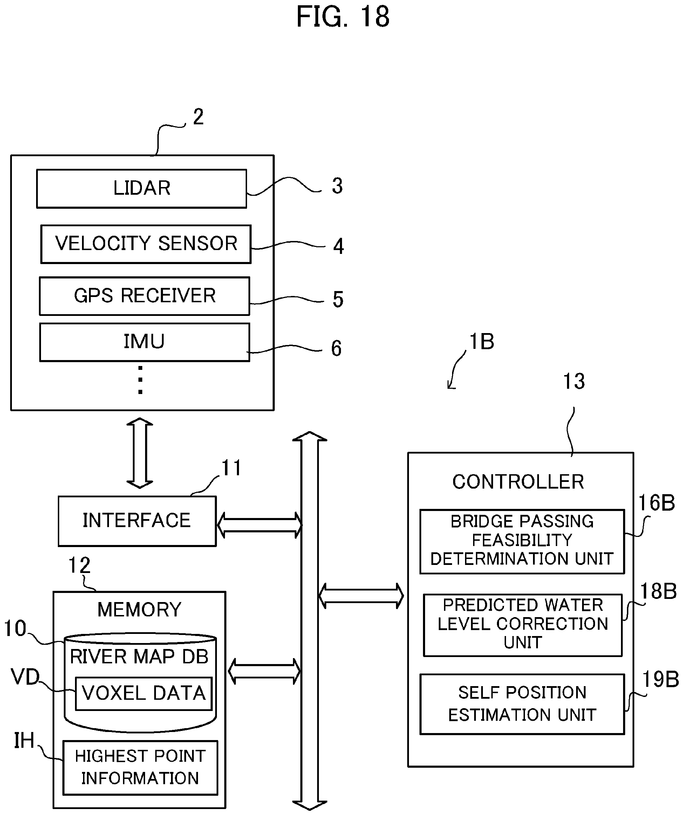

FIG. 18 is a block diagram of an information processing device 1B according to the third embodiment. As shown, the information processing device 1B includes an interface 11, a memory 12, and a controller 13.
The interface 11 acquires output data from each sensor of the sensor group 2 and supplies the data to the controller 13. The sensor group 2 includes a lidar 3, a velocity sensor 4 for detecting the velocity of the ship, a GPS receiver 5, and an inertial measurement device (IMU: Inertial Measurement Unit) 6 for measuring the acceleration and the angular velocity of the moving ship in three axial directions. The velocity sensor 4 may be, for example, a Doppler-based velocimeter or a GNSS-based velocimeter.
The memory 12 stores the river maps DB 10 and the highest point information IH described in the first embodiment. The river map DB 10 includes voxel data VD.
The voxel data VD is data in which position data of a stationary object (structural object) is recorded for each voxel, wherein a voxel indicates a cube (regular grid) that functions as the smallest unit of three dimensional space. The voxel data VD contains data representing measured point cloud data regarding a stationary object by using the normal distribution for each voxel. As will be described later, the voxel data VD is used for scan matching using NDT (Normal Distributions Transform). For example, the information processing device 1B performs estimation of the position on the plane, the height position, the yaw angle, the pitch angle, and the roll angle of the ship by NDT scanning matching. Unless otherwise indicated, the self position shall include posture angle(s) of the ship such as the yaw angle of the ship. The voxel data VD may be a part of the river map DB 10.
The controller 13 functionally includes a bridge passage feasibility determination unit 16B, a predicted water level correction unit 18B, and a self position estimation unit 19B.
The bridge passage feasibility determination unit 16B makes a feasibility determination as to passing under the bridge existing on the determined operation route. The process that the bridge passage feasibility determination unit 16B executes is the same as the process that the bridge passage feasibility determination unit 16A does in the second embodiment. The predicted water level correction unit 18B generates water level correction information for correcting the predicted water level at respective water level prediction points indicated by the predicted water level information D1 received from the server device 7, and supplies the generated water level correction information to the bridge passage feasibility determination unit 16B.
The self position estimation unit 19B estimates the self position by performing NDT-based scan matching (NDT scan matching) on the basis of the point cloud data outputted from the lidar 3 and the voxel data VD corresponding to the voxels to which the point cloud data belongs. Here, the point cloud data to be processed by the self position estimation unit 19B may be point cloud data generated by the lidar 3 or may be point cloud data after the down-sampling of the point cloud data. The controller 13 according to the third embodiment functions as the "ship reference height calculation unit", the "measurement water level calculation unit", the "correction information generating unit", the "bridge water level calculation unit", the "bridge passage feasibility determination unit", and a computer or the like for executing the program.

(3-2) NDT Scan Matching

Next, a description will be given of the position estimation based on NDT scan matching executed by the self position estimation unit 19B.

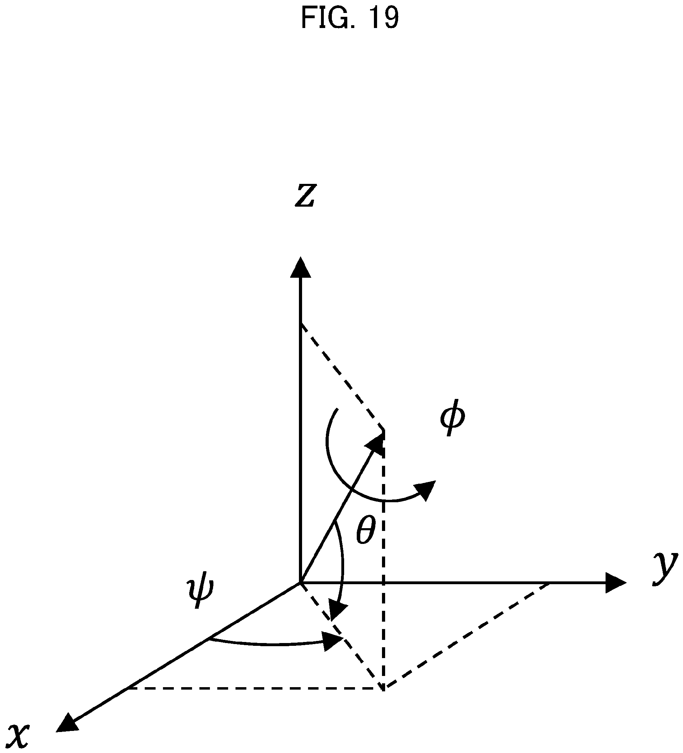

FIG. 19 is a diagram showing the position of the ship in three-dimensional Cartesian coordinate system. As shown, the self position on the plane defined by the three-dimensional Cartesian coordinates xyz is represented by the coordinates "(x, y, z)", the roll angle "$\varphi$", the pitch angle "0", and the yaw angle (azimuth) "$\psi$" of the ship. Here, the roll angle $\varphi$ is defined as the rotation angle around the traveling direction of the ship, the pitch angle $\theta$ is defined as the elevation angle of the traveling direction of the ship with respect to the x-y plane, and the yaw angle $\psi$ is defined as the angle formed by the traveling direction of the ship and the x-axis. The coordinates (x, y, z) are world coordinates indicating the absolute position corresponding to a combination of latitude, longitude, and altitude or any other position with respect to a predetermined point as the origin, for example. Then, the self position estimator 19B performs self position estimation using these x, y, z, $\varphi$, $\theta$, and $\psi$ as the estimation parameters.

Next, the voxel data VD used for NDT scan matching will be described. The voxel data VD contains the data which indicates the normal distribution representing the measured point cloud data of stationary structures in each voxel.

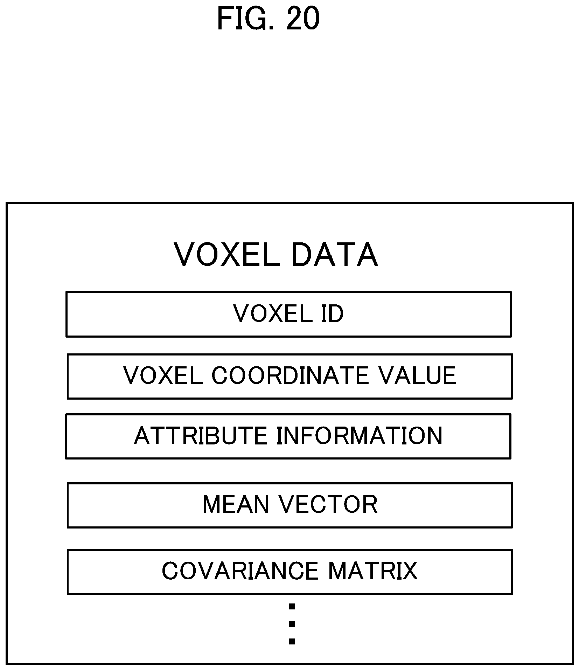

FIG. 20 shows an exemplary schematic data structure of the voxel data VD. The voxel data VD includes parameter information, which represents the point cloud data per voxel by normal distribution. In this embodiment, as shown in FIG. 4, it includes the "voxel ID", the "voxel coordinate value", the "attribute information", the "mean vector", and the "covariance matrix".

The "voxel ID" indicates identification information of each voxel. The "voxel coordinate value" indicates the absolute three-dimensional coordinate value of the reference position, such as the center position, of each voxel. Each voxel is a cube obtained by dividing the space into a lattice shape and since the shape and size thereof are determined in advance, it is possible to identify the space of each voxel by the voxel coordinate value. The voxel coordinate value may be used as voxel ID.

The "attribute information" indicates information relating to the attributes of each voxel. For example, in the present embodiment, the "attribute information" of such voxels corresponding to a bridge includes information indicating that it is a bridge part. The "attribute information" of voxels corresponding to a girder bottom portion of a bridge (i.e., the bottom surface of the structural part on the river) may further include information indicating that it is the bottom of the girder.

The "mean vector" and the "covariance matrix" indicates the mean vector and the covariance matrix corresponding to the parameters of the normal distribution which represents the point cloud in each voxel. It is herein assumed that the number of points of the point cloud in an arbitrary voxel "n" is defined as "$N_n$" and the coordinate value of any point "i" in the voxel n is defined as follows

$$X_n(i) = [x_n(i), y_n(i), z_n(i)]^T.$$

In this case, the mean vector "$\mu_n$" and the covariance matrix "$V_n$" in the voxel n are expressed by the following equations (1) and (2), respectively.

$$\mu_n = \begin{bmatrix} \overline{x}_n \\ \overline{y}_n \\ \overline{z}_n \end{bmatrix} = \frac{1}{N_n} \sum_{i=1}^{N_n} X_n(i) \quad (1)$$

$$V_n = \frac{1}{N_n - 1} \sum_{i=1}^{N_n} \{X_n(i) - \mu_n\}\{X_n(i) - \mu_n\}^T \quad (2)$$

Next, the outline of the NDT scan matching using the voxel data VD will be described.

In the NDT scan matching assuming a ship as the target, the following estimated parameters which includes the displacement in the three-dimensional space (here, x, y, z coordinates) and the orientation of the ship as elements.

$$P = [t_x, t_y, t_z, t_\varphi, t_\theta, t_\psi]^T$$

Here, "$t_x$" is the displacement in the x direction, "$t_y$" is the displacement in the y direction, "$t_z$" is the displacement in the z direction, "$t_\varphi$" is the roll angle, "$t\theta$" is the pitch angle, "$t_\psi$" is the yaw angle.

Further, the coordinates of the point cloud data outputted by the lidar 3 are expressed by the following equation.

$$X_L(j) = [x_n(j), y_n(j), z_n(j)]^T$$

Then, the mean value "$L'_n$" of $X_L(j)$ is expressed by the following equation (3).

$$\mathbf{L}'_n = \begin{bmatrix} L'_x \\ L'_y \\ L'_z \end{bmatrix} = \frac{1}{N} \sum_{j=1}^{N} \mathbf{X}_L(j)$$

Then, coordinate transformation based on a known coordinate transformation process is applied to the mean $L'_n$ using the estimation parameters P described above. Hereinafter, the coordinate value after the coordinate transformation is denoted by "$L_n$".

Then, the self position estimation unit 19B retrieves the voxel data VD associated with the point cloud data transformed into the world coordinate system. Here, the world coordinate system is the absolute coordinate system employed in the map DB 10 (including voxel data VD). In some embodiments, the self position estimation unit 19B may exclude the voxel data VD of voxels located below the water surface position (in the height direction) from the target of retrieval. Thus, the information processing device 1B can omit unnecessary processes when performing the association between the point cloud data and the voxel, and suppresses a decrease in the position estimation accuracy caused by an error in the association.

The self position estimation unit 19B calculates the value (also referred to as "individual evaluation function value") "$E_n$" of a matching evaluation function of the voxel n using the mean vector $\mu_n$ and the covariance matrix $V_n$ included in the retrieved voxel data VD.

In this instance, the self position estimation unit 19B calculates the individual evaluation function value $E_n$ of the voxel n based on the following equation (4).

$$E_n = \exp\left\{-\frac{1}{2}(\mathbf{L}_n - \mathbf{\mu}_n)^T \mathbf{V}_n^{-1}(\mathbf{L}_n - \mathbf{\mu}_n)\right\} \quad (4)$$

Then, the self position estimation unit 19B calculates an overall evaluation function value (also referred to as "score value") "$E(k)$" for all voxels to be matched, as shown by the following equation (5). The score value E serves as an index value of the goodness of fit of the matching.

$$E(k) = \sum_{n=1}^{M} E_n = E_1 + E_2 + \cdots + E_M \quad (5)$$

Thereafter, the self position estimation unit 19B calculates the estimation parameters P at which the score value $E(k)$ is maximized, by an arbitrary root finding algorithm such as Newton method. Then, the self position estimation unit 19B obtains the self position (also referred to as the "NDT position") "$X_{NDT}(k)$" based on the NDT scan matching by applying the estimation parameters P to the dead reckoning position (also referred to as "DR position") at the time k. Then, the self position estimation unit 19B uses the NDT position $X_{NDT}(k)$ as the finally estimated self position (also referred to as "estimated self position") "$X^{\wedge}(k)$" at the present clock time k. Here, the DR position $X_{DR}(k)$ corresponds to a tentative self position prior to the calculation of the NDT position $X_{NDT}(k)$, and is also referred to as the predicted self position "$X^-(k)$". In this instance, the NDT position $X_{NDT}(k)$ is expressed by the following equation (6).

$$\mathbf{X}_{NDT}(k) = \overline{\mathbf{X}}(k) + \mathbf{P}$$

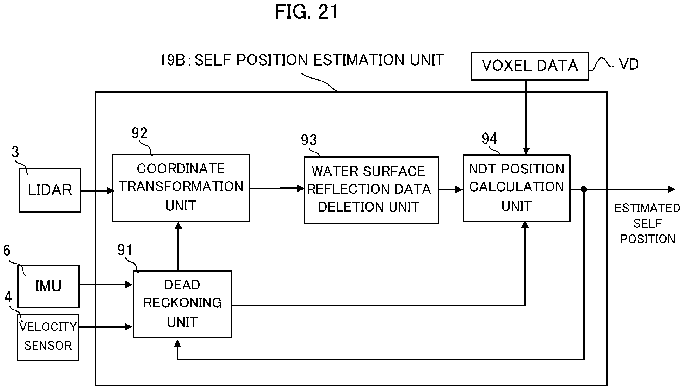

FIG. 21 is an exemplary functional block diagram of the self position estimation unit 19B. As illustrated, the self position estimation unit 19B includes a dead reckoning unit 91, a coordinate transformation unit 92, a water surface reflectance data deletion unit 93, and an NDT position calculation unit 94.

The dead reckoning unit 91 calculates the DR position on the basis of a signal outputted by the sensor group 2. Specifically, the dead reckoning unit 91 uses the moving velocity and the angular velocity of the ship based on the output from the velocity sensor 4 and IMU 6 or the like to determine the moving distance and the azimuth orientation change from the previous time. The DR position calculation unit 91 calculates the DR position $X_{DR}$ (k) at the time k obtained by adding the movement distance and the azimuth orientation change to the estimated own vehicle position $X^\wedge$ (k-1) at the time k-1 which is the previous clock time preceding to the current clock time k. This DR position $X_{DR}$ (k) is the own vehicle position calculated at the time k based on dead reconning, and corresponds to the predicted own vehicle position $X^-$ (k). The DR position $X_{DR}$ (k) is the self position calculated at the time k based on dead reconning, and corresponds to the predicted self position $X^-$ (k). It is noted that when the estimated self position $X^\wedge$ at the time k-1 is not obtained because of it being immediately after the start of the self position estimation, the dead reckoning unit 91 determines the DR position $X_{DR}$ (k), based on the signal outputted by GNSS receiver 5, for example.

The coordinate transformation unit 92 transforms the point cloud data based on the output from the lidar 3 into data in the world coordinate system that is the same coordinate system as the map DB 10. In this case, for example, based on the predicted own vehicle position outputted by the DR position calculation unit 91 at the time k, the coordinate transformation unit 92 performs coordinate transformation of the point cloud data at the time k. It is noted that the process of transforming the point cloud data in the lidar coordinate system with respect to the lidar installed in the vehicle to the vehicle coordinate system, and the process of transforming the vehicle coordinate system to the world coordinate system are disclosed in the International Publication WO2019/188745 and the like, for example.

The water surface reflection data deletion unit 93 deletes data (also referred to as "water surface reflection data") erroneously generated by the lidar 3, which receives the light reflected at the water surface, from the point cloud data supplied from the coordinate transformation unit 92. In this case, the water surface reflectance data deletion unit 93 deletes, from the point cloud data, data representing positions below (including the same height, hereinafter the same) the water surface position (i.e., data representing positions with the same or lower z coordinate value as or than the water surface position). In some embodiments, for example, the water surface reflection data deletion unit 93 estimates the water surface position based on the z-coordinate value after the coordinate transformation of the point cloud data outputted the lidar 3 when the ship is away from the shore by a predetermined distance or more. Then, the water surface reflection data deletion unit 93 supplies the NDT position calculation unit 94 with the point cloud data after deletion of the data below the water surface position from the point cloud data supplied from the coordinate transformation unit 92.

The NDT position calculation unit 94 calculates the NDT position based on the point cloud data supplied from the water surface reflection data deletion unit 93. In this case, the NDT position calculation unit 94 performs matching (registration) between the point cloud data in the world coordinate system supplied from the water surface reflection data deletion unit 93 and the voxel data VD represented in the world coordinate system to associate the point cloud data with matched voxels. Then, the NDT position calculation unit 94 calculates the individual evaluation function value $E_n$ based on the equation (4) for each voxel that is associated with the point cloud data, and calculates estimation parameters P to maximize the score value E (k) based on the equation (5). Based on the equation (6), the NDT position calculation unit 94 determines the NDT position $X_{NDT}$ (k) at time k obtained by applying the estimation parameters P at the time k to the DR position $X_{DR}$ (k) outputted by the dead reconning unit 91. The NDT position calculation unit 94 outputs the NDT position $X_{NDT}$ (k) as the estimated self position $X^\wedge$ (k) at the time k.

(3-3) Generation of Water Level Correction Information

The predicted water level correction unit 18B calculates the measured water level based on the ship reference height obtained by self position estimation and the water level distance based on the water level measurement data, and generates the water level correction information based on the comparison result between the measured water level and the predicted water level.

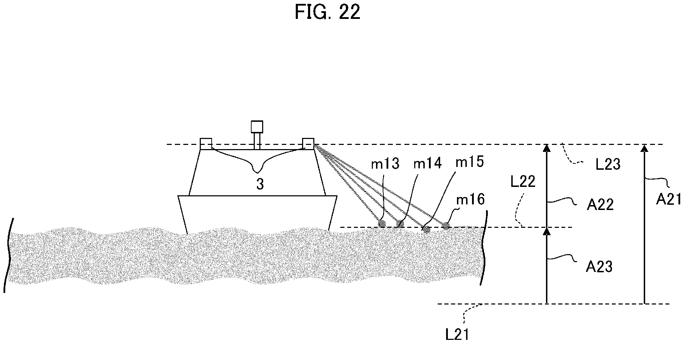

FIG. 22 is a rear view of the ship. The line L21 indicates the origin of the height (for example, altitude) adopted in the predicted bridge water level and the like, the line L22 indicates the water surface position, and the line L23 indicates the position with the same height as the ship reference position. Furthermore, the measured points "m13" to "m16" indicate the measured points of the water surface measured by the lidar 3. In this case, the predicted water level correction unit 18B calculates the water surface distance corresponding to the arrow A22 by performing the same process as the candidate route suitability determination unit 16 according to the first embodiment, based on the water surface measurement data corresponding to the measured points "m13" to "m16" of the water surface. Then, the predicted water level correction unit 18B calculates, as the measured water level, the height (i.e., the height indicated by the arrow A23) obtained by subtracting the water surface distance indicated by the arrow A22 from the ship reference height indicated by the arrow 21 obtained by the self position estimation.

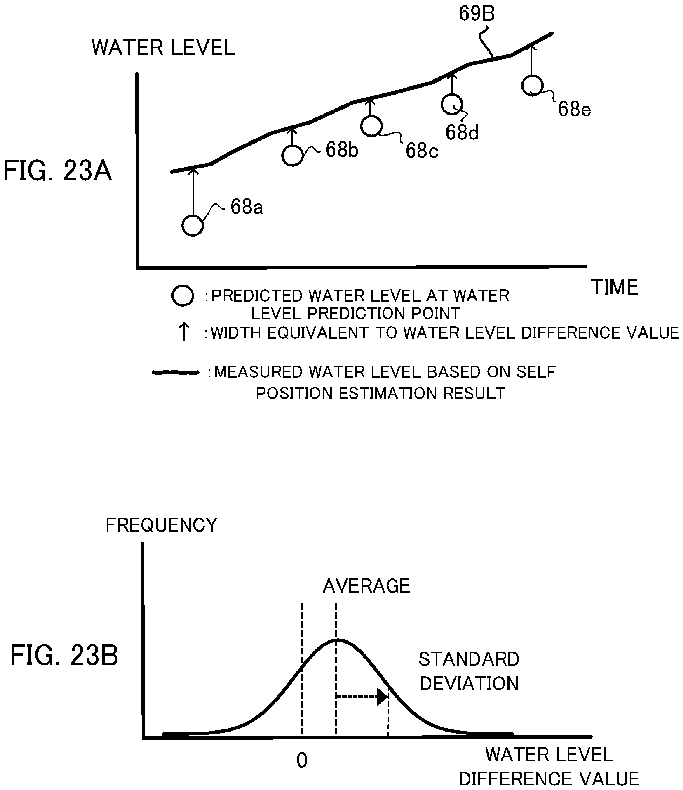

FIG. 23A shows the time variation in the predicted and measured water levels at the point where the ship is located. Here, the graph 69B represents the measured water level calculated by the self position estimation result in the height direction (z-coordinate) and the water surface distance based on the water surface measurement data. As described above, it is possible to calculate the measured water level based on the self position estimation and the water surface distance every time the lidar 3 generates the point cloud data. Thus, although the measured water level is discretely obtained, due to the short cycle period of the lidar 3 (e.g., 100 [ms]), the graph 69B approximates a continuous line. The solid cycles 68a to 68e each represents the predicted water level at a water level prediction point where the ship passed. In addition, arrows corresponding to the solid circles 68a to 68e each indicates a width corresponding to the water level difference value.

As shown in the figure, the predicted water level correction unit 18B calculates the measured water level on the operation route based on the self position estimation result continuously obtained by the self position estimation unit 19B, and calculates the water level difference value corresponding to the difference between the measured water level and the predicted water level at each water level prediction point that the ship has already passed. In the embodiment shown in FIG. 23A, the predicted water level correction unit 18B calculates the water level difference values at five points corresponding to the solid circles 68a to 68e.

FIG. 23B is an example of a distribution representing the frequency (i.e., the number of times) of a plural water level difference values calculated within a most recent predetermined period. The predicted water level correction unit 18B sums up the water level difference values calculated for each water level prediction point that has already passed, and calculates statistics such as the mean (average) and standard deviation of the water level difference values. Then, the predicted water level correction unit 18B supplies the calculated mean and standard deviation of the water level difference values to the bridge passage feasibility determination unit 16B as the water level correction information for correction of the predicted bridge water level. Thereafter, the bridge passage feasibility determination unit 16B corrects the predicted water level at each water level prediction point on the operation route based on the water level correction information received from the predicted water level correction unit 18B. Then, based on the predicted water level after the correction (i.e., the sum of the predicted water level before the correction and the averaged water level difference value), the bridge passage feasibility determination unit 16B calculates the expected passing time and the bridge correction water level at each bridge passing point on the operation route where the ship has not passed yet. Then, the bridge passage feasibility determination unit 16B calculates the ship highest point height based on the water surface distance, the corrected bridge water level, and the highest point information IH, and calculates the predicted clearance from the ship highest point height. In some embodiments, the bridge passage feasibility determination unit 16B stores, in the memory 12 or the like, information (see FIG. 15) in which the calculated expected passing time, the corrected bridge water level, and the predicted clearance are associated for each bridge existing on the operation route in which the ship has not passed yet.

(3-4) Functional Blocks

FIG. 24 is an example of the functional blocks of the predicted water level correction unit 18B related to the generation of the water level correction information in the third embodiment. The predicted water level correction unit 18B functionally includes a ship reference high acquisition unit 83B, a water surface distance calculation unit 84B, a measured water level calculation unit 85B, and a water level correction information generation unit 86B.

The ship reference height acquisition unit 83B acquires, as the ship reference height, the z-coordinate value included in the self position estimation result supplied from the self position estimation unit 19B. The water surface distance calculation unit 84B extracts the water surface measurement data obtained by measuring the water surface from the point cloud data outputted by the lidar 3, and calculates the water surface distance based on the extracted water surface measurement data. The calculation of the water surface distance may be performed at a frequency lower than the frequency of the self position estimation by the self position estimation unit 19B.

The measured water level calculation unit 85B calculates the measured water level based on the ship reference height obtained by the ship reference height acquisition unit 83B and the water level distance calculated by the water level distance calculation unit 84B. The measured water level calculation unit 85B may calculate the measured water level every time the self position estimation result is obtained, or may calculate the measured water level at a frequency lower than the frequency at which the self position estimation result is obtained.

Based on the predicted water level information D1 and the measured water level calculated by the measured water level calculation unit 85B, the water level correction information generation unit 86B compares the measured water level with the predicted water level at each water level prediction point where the ship has already passed, thereby calculating the water level difference values. Then, the water level correction information generation unit 86B generates the water level correction information including the mean value or any other statistic of the water level difference values of the water level prediction points where the ship has already passed, and supplies the generated water level correction information to the bridge passage feasibility determination unit 16B.

(3-5) Processing Flow

FIG. 25 is an example of a flowchart illustrating a process of generating water level correction information that is executed by the predicted water level correction unit 18B in the third embodiment.

First, the predicted water level correction unit 18B acquires the ship reference height based on the self position estimation result outputted by the self position estimation unit 19B (step S31). Then, the predicted water level correction unit 18B calculates the measured water level based on the ship reference height, the water surface distance calculated from the water surface measurement data extracted from the point cloud data outputted by the lidar 3 (step S32). The predicted water level correction unit 18B repeatedly performs the processes at step S31 and step S32 until the ship passes the water level prediction point.

Then, if the ship passes a water level prediction point, the predicted water level correction unit 18B generates water level correction information based on the comparison result between the predicted water level and the measured water level at the target water level prediction point (step S33). In this instance, the predicted water level correction unit 18B generates the water level correction information based on a plurality of water level difference values (i.e., the water level difference value at the target water level prediction point immediately after passing and the water level difference value(s) at the water level prediction point(s) passed prior to the target water level prediction point).

(3-6) Modification

The voxel data VD is not limited to a data structure that includes a mean vector and a covariance matrix, as shown in FIG. 20. For example, the voxel data VD may directly include the point cloud data used in calculating the mean vector and the covariance matrix. The self position estimation technique using voxel data VD is not limited to NDT scan matching. For example, the information processing device 1B may perform self position estimation by matching (registration) between the voxel data VD and the point cloud data outputted by the lidar 3 based on ICP (Iterative Closest Point).

As described above, the controller 13 of the information processing device 1B according to the third embodiment calculates the ship reference height which is the height of the reference position of the ship based on the self position estimation using the measurement data of a feature measured by the lidar 3 provided on the ship. Then, the controller 13 calculates a measured water level representing the height of the water surface based on the ship reference height and water surface measurement data that is the measurement data of the water surface measured by the lidar 3. Then, the controller 13 generates water level correction information regarding predicted water level information, based on the predicted water level according to the predicted water level information representing a predicted water level for each water level prediction point in the river and the measured water level calculated at the each water level prediction point corresponding to the predicted water level or a point closest to the each water level prediction point. Therefore, by using the generated water level correction information, it is possible to accurately estimate the water level at the bridge point located on the candidate route. Thus, in a mode of performing highly accurate self position estimation with respect to the height direction, the information processing device 1B generates water level correction information for correcting the predicted water level with high accuracy using the self position estimation result, and can accurately make a feasibility determination of passing under the bridge that has not been passed by the ship yet existing on the operation route subject to the water level prediction.

<Fourth Embodiment>

In the fourth embodiment, the server device 7 collects the water level difference values calculated according to the second embodiment or the third embodiment, and updates the predicted water level DB 70 based on the collected water level difference values. Thus, the server device 7 suitably distributes the predicted water level information D1 indicating the corrected high-precision water level based on the measured water level to the information processing device 1.

(4-1) Configuration

FIG. 26 is a schematic configuration of an operation support system according to a fourth embodiment. In the operation support system according to the fourth embodiment, there are a plurality of information processing devices 1C (1Ca,1Cb, ...) which execute the process according to any one of the second embodiment or the third embodiment. Then, the server device 7C according to the fourth embodiment receives the measured water level information "D2" relating to the correction of the predicted water level based on the measured water level from each of the information processing devices 1C, and updates the predicted water level DB based on the received measured water level information D2. Hereafter, the same components as those in the first embodiment, the second embodiment, or the third embodiment are appropriately denoted by the same reference numerals, and a description thereof will be omitted.

The information processing devices 1C according to the fourth embodiment each is equipped with the same hardware configuration as the information processing device 1A according to the second embodiment shown in FIG. 11 or the information processing device 1B according to the third embodiment shown in FIG. 18. Then, the information processing devices 1C are moving together with ships existing on the river, respectively, and based on the output from the various sensors included in the sensor group 2 (not shown) and the predicted water level information D1 transmitted from the server device 7C, each of the information processing devices 1 performs the operation support of the provided ship. The information processing devices 1C perform calculation of the water level difference value based on the second embodiment when any high-precision self position estimation including the height direction is not performed, while it performs calculation of the water level difference value based on the third embodiment when a high-precision self position estimation (e.g., self position estimation based on NDT scan matching) including the height direction is performed. Then, each of the information processing devices 1C transmits, to the server device 7C, the calculated water level difference value, the position information representing the location (i.e., water level prediction point) where the water level difference value is calculated, the measured water level information D2 including the calculation time (date and time) of the water level difference value.

The server device 7C according to the fourth embodiment updates the predicted water level DB 70 based on the measured water level information D2 received from the information processing device 1C. FIG. 27 is a block diagram illustrating an exemplary hardware configuration of a server device 7C. The server device 7C mainly includes an interface 71, a memory 72, and a controller 73. Each of these elements is connected to each other through a bus line.

The interface 71 performs the interface operation related to the transfer of data between the server device 7C and the external device. In the present embodiment, under the control of the controller 73, the interface 71 performs a process of transmitting the predicted water level information D1 to the information processing devices 1C and a process of receiving the measured water level information D2 from the information processing devices 1C. The memory 72 may be configured by a variety of volatile and non-volatile memories such as a RAM, a ROM, a hard disk drives, a flash memory, and the like. The memory 72 stores a program for the controller 73 to perform a predetermined process. Further, the memory 72 stores the predicted water level DB 70 described in the first embodiment, and a measurement water level information DB 75 which is a database obtained by accumulating the measurement water level information D2. The predicted water level DB 70 is updated based on the measured water level information DB 75 as described later.

(4-2) Data Structure

FIG. 28A shows an example of the data structure of the predicted water level DB 70. The predicted water level DB 70 mainly includes items "water level prediction point", "update time" and "predicted water level".

The "water level prediction point" is information to identify a water level prediction point targeted in each record of predicted water level DB 70. Here, as an example, a two-dimensional coordinate value (for example, a set of latitude and longitude) of the water level prediction point are recorded as "water level prediction point". The "update time" indicates the date and time when the predicted water level was updated. It is noted that, when the predicted water level has not been updated, the "update time" indicates the prediction time of the predicted water level. The "update time" may be provided for each time-specific predicted water level. The "predicted water level" indicates the predicted water level for each prediction time of the water level. Each value of the predicted water level recorded as the "predicted water level" is updated based on the measured water level information DB 75.

FIG. 28B is an exemplary data structure of the measured water level information D2. The measured water level information D2 mainly includes items "position information", "time", "water level difference value", "water level difference standard deviation", "predicted water level", and "measured water level".

The "position information" is position information representing a place where the water level difference value was calculated (i.e., a water level prediction point or a place close to the water level prediction point). Here, the "position information" is represented by a two-dimensional coordinate value representing the above-described place on the horizontal plane. The "time" indicates the date and time at which the water level difference value (or measured water level) was calculated. The "water level difference value" represents the mean value of the water level differences. The "water level difference standard deviation" represents the standard deviation in the water level differences. The "predicted water level" represents the predicted water level used for calculation of the corresponding water level difference value. It is noted that the "predicted water level" may include information on the time (update time) when the prediction or update of the predicted water level was performed, in addition to or in place of the predicted water level. If the information on the update time shown in FIG. 28A is included in the predicted water level information D1 received by the information processing device 1C, the information on the time, for example, represents the update time. The "measured water level" indicates the measured water level used to calculate the corresponding water level difference value.

The data structure of the measured water level information D2 is not limited to the illustrated data structure. For example, the measured water level information D2 may not include information regarding the "predicted water level" and the "measured water level". In other instances, the measured water level information D2 may include only one record instead of including a plurality of records. In this instance, the information processing device 1C, for example, transmits the measured water level information D2 including a record related to the calculated water level difference value to the server device 7C each time the water level difference value is calculated.

(4-3) Predicted Water Level Update Process

Next, the update process (predicted water level update process) of the predicted water level recorded in the predicted water level DB 70 will be specifically described.

FIG. 29 is an example of the functional blocks of the controller 73 of the server device 7C according to the fourth embodiment. As illustrated, the controller 73 of the server device 7C according to the fourth embodiment functionally includes a receiving unit 76, an update unit 77, and a distribution unit 78.

The receiving unit 76 receives the measured water level information D2 from the information processing device 1C via the interface 71. Then, the receiving unit 76 stores the received measurement water level information D2 in the measurement water level information DB 75.

Based on the measured water level information DB 75, The update unit 77 updates the predicted water level DB 70. In this case, for example, for each of the records in the measurement water level information DB 75 (i.e. each record in the measurement water level information D2 shown in FIG. 28), the update unit 77 firstly identifies the water level prediction point indicated by the position information (i.e., the water level prediction point nearest to the point indicated by the position information). Then, the update unit 77 aggregates the water level difference values included in the records of the measured water level information DB 75 for each water level prediction point, and then corrects the predicted water level of each water level prediction point recorded in the predicted water level DB 70 based on a representative value, such as the mean value, of the water level difference values for each water level prediction point. In this case, in some embodiments, the update unit 77 performs statistical processing on the water level difference values received from a plurality of information processing devices for each water level prediction point, and then adds the representative value, such as a mean value, to the predicted water level at each time at each corresponding water level prediction point.

In some embodiments, at the time of statistical processing for the water level difference values received from the plurality of information processing devices described above, the update unit 77 may perform weighted averaging process using the standard deviation of the water level differences. For example, upon receiving the water level difference standard deviation $\mu_i$ and the water level difference standard deviation $\sigma_i$ from the N information processing devices 1C (i = 1, 2, ..., N), the update unit 77 calculates the corrected value "Cw" for the predicted water level according to the following equation (7).

$$\text{Cw} = \frac{1}{\frac{1}{\sigma_1^2} + \frac{1}{\sigma_2^2} + \cdots + \frac{1}{\sigma_N^2}} \left( \frac{1}{\sigma_1^2} \mu_1 + \frac{1}{\sigma_2^2} \mu_2 + \cdots + \frac{1}{\sigma_N^2} \mu_N \right) = \frac{1}{\sum_{i=1}^{N} \frac{1}{\sigma_i^2}} \sum_{i=1}^{N} \frac{1}{\sigma_i^2} \mu_i$$

Since the reciprocal of the variance value, which is obtained by squaring the standard deviation, is used for the weighting in the equation (7), the weight value becomes larger for such a result more stably calculated with little variation in the water level difference value, and the weighting value becomes smaller for such a result less stably calculated with large variation in the water level difference value. Therefore, the update unit 77 can calculate the corrected value Cw with high reliability by the process in which the stable results are emphasized.

In this case, in some embodiments, the update unit 77 may correct the predicted water level based on the water level difference values calculated after the update time of the predicted water level recorded in the predicted water level DB 70. For example, when updating the first record shown in FIG. 28A, the update unit 77 extracts, from the measured water level information DB 75, such a record that the "position information" indicates a position within a predetermined distance (threshold for determining whether these points are identical to each other or not) from the water level prediction point "(va, wa)" and the "time" indicates " 17:00 September 12" or later, and then corrects the predicted water level based on the water level difference value indicated by the extracted record. In some embodiments, if the information indicating the update time of the predicted water level used in the calculation of the water level difference value is included in the measured water level information DB 75, the update unit 77 may correct the predicted water level by using only water level difference values which match the update time recorded in the predicted water level DB 70. Thus, it is possible to prevent correction of the predicted water level using the water level difference values, which are information calculated based on the old predicted water level.

The distribution unit 78 transmits the predicted water level information D1 including information regarding the predicted water level extracted from the predicted water level DB 70 to the information processing devices 1C via the interface 71. In this case, upon receiving predetermined request information from an information processing device 1C, the distribution unit 78 may transmit the predicted water level information D1 relating to the predicted water level at water level prediction points in the area or river specified by the request information to the information processing device 1C. In another example, every time the predicted water level DB 70 is updated, the distribution unit 78 may transmit the predicted water level information D1 regarding the updated predicted water level to the information processing devices 1C. In this way, the distribution unit 78 distributes the information related to the predicted water level to the information processing devices 1C based on either the push-based information delivery or the pull-based information delivery.

FIG. 30A is an example of a flowchart executed by an information processing device 1C according to the fourth embodiment. The information processing device 1C repeatedly executes the process of the flowchart during the operation of the ship.

The information processing device 1C receives the predicted water level information D1 from the server device 7C and stores the received predicted water level information D1 (step S41). Next, the information processing device 1C calculates, according to the second embodiment or the third embodiment, the measured water level and the water level difference value at each water level prediction point that the ship has already passed (step S42). In this instance, by executing the flowchart of the water level correction information generation process shown in FIG. 17 or FIG. 25, the information processing device 1C obtains the measured water level and the water level difference value at each water level prediction point. Then, the information processing device 1C determines whether or not it is the timing of transmitting the measured water level information D2 (step S43). For example, every time a predetermined number of the water level difference values are calculated, the information processing device 1C may transmit the records corresponding to the calculated water level difference values to the server device 7C as the measured water level information D2 collectively. In another example, it may transmit all records corresponding to the calculated water level difference values after completion of the operation on the operation route to the server device 7C collectively as the measured water level information D2.

Upon determining that it is the timing of transmitting the measurement water level information D2 (step S43; Yes), the information processing device 1C transmits the measurement water level information D2 including a set of the water level difference value calculated at step S42 and corresponding time information and position information to the server device 7C (step S44). On the other hand, upon determining that it is not the timing of transmitting the measured water level information D2 (step S43; No), the information processing device 1C calculates the measured water level and the water level difference value at the water level prediction point at step S42 if there is a water level prediction point that the ship has passed through.

FIG. 30B is an example of a flowchart that is executed by the server device 7C according to the third embodiment. The server device 7C repeatedly executes the process of this flowchart.

First, the server device 7C receives the measurement water level information D2 transmitted from the information processing device 1C, and stores the received measurement water level information D2 in the measurement water level information DB 75 (step S51). Then, the server device 7C determines whether or not it is the timing of updating the predicted water level DB 70 (step S52). For example, if there is a water level prediction point at which a predetermined number or more of the water level difference values are collected, the server device 7C may determines that it is the timing of updating the predicted water level at the water level prediction point. In another embodiment, at predetermined time intervals, the server device 7C determines that it is the timing of updating the predicted water level DB 70 and updates the predicted water level at the water level prediction points at which the water level difference values have been collected. Upon determining that it is not the timing of updating the predicted water level DB 70 (step S52; No), the server device 7C receives and stores the measured water level data D2 at step S51.

On the other hand, upon determining that it is the timing of updating the predicted water level DB 70 (step S52; Yes), the server device 7C calculates the update value of the predicted water level based on the water level difference values registered in the measured water level information DB 75 (step S53). In this instance, for example, for each water level prediction point, the server device 7C calculates the update value of the predicted water level on the basis of the mean value of the water level difference values and the predicted water level prior to the update. Then, the server device 7C updates the predicted water level DB 70 based on the calculated update values of the predicted water level (step S54). Thereafter, the server device 7C distributes the predicted water level information D1 based on the updated predicted water level DB 70 to the respective information processing devices 1C. Thus, the server device 7C can distribute the predicted water level information D1 indicating the accurate predicted water level, in which the measured water level measured at each water level prediction point is accurately reflected, to the information processing device 1C.

(4-4) Modification

Instead of calculating the update value of the predicted water level based on the water level difference values included in the measured water level information D2, the server device 7C may calculate the update value of the predicted water level based on the measured water level included in the measured water level information D2.

In this modification, the measured water level information D2 includes the measured water level at each water level prediction point, and information indicating the time and position at which the measured water level was calculated. Then, by referring to the predicted water level DB 70 and the measured water level information DB 75 in which the measured water level information D2 is reflected, the server device 7C calculates the water level difference values to thereby calculate the update values of the predicted water level according to the fourth embodiment described above based on the calculated water level difference values. In this instance, the server device 7C refers to the measured water level information DB 75 and calculates a representative value, such as the mean value, of the water level measurement values at each water level prediction point and each time slot (time slots corresponding to "time a" and "time b" in the predicted water level DB 70 shown in FIG. 28A). Then, for each water level prediction point and time, the server device 7C calculates the water level difference value that is the difference value between the predicted water level registered in the predicted water level DB 70 and the representative value, such as the mean value, of the corresponding measured water level values. Then, the server device 7C calculates a representative value, such as a mean value, of the calculated water level difference values for each water level prediction point, and then calculates the update value of the predicted water level at each water level prediction point, based on the calculated water level difference value.

Even in this modification, the server device 7C updates each predicted water level recorded in the predicted water level DB 70 to an accurate value in which the water level measured at each water level prediction point is accurately reflected, and distributes the predicted water level information D1 indicating the accurate predicted water level to the information processing devices 1C.

As described above, the controller 73 of the server device 7C according to the fourth embodiment stores the predicted water level DB 70 representing the predicted water level for each water level prediction point in the river. Then, the controller 73 receives, from plural ships, the measured water level information D2 relating to the measured water level measured by the ships. Then, the controller 73 updates the predicted water level DB 70 based on the measured water level information D2. Then, the controller 73 distributes the predicted water level information D1 generated based on the predicted water level DB 70. According to this mode, the server device 7C can distribute the predicted water level information D1 indicating the accurate predicted water level, in which the water level measured at each water level prediction point is accurately reflected, to the information processing device 1C.

In the embodiments described above, the program is stored by any type of a non-transitory computer-readable medium (non-transitory computer readable medium) and can be supplied to a control unit or the like that is a computer. The non-transitory computer-readable medium include any type of a tangible storage medium. Examples of the non-transitory computer readable medium include a magnetic storage medium (e.g., a flexible disk, a magnetic tape, a hard disk drive), a magnetic-optical storage medium (e.g., a magnetic optical disk), CD-ROM (Read Only Memory), CD-R, CD-R/W, a solid-state memory (e.g., a mask ROM, a PROM (Programmable ROM), an EPROM (Erasable PROM), a flash ROM, a RAM (Random Access Memory)).

While the present invention has been described with reference to the embodiments, the present invention is not limited to the above embodiments. Various modifications that can be understood by a person skilled in the art can be made to the configuration and details of the present invention within the scope of the present invention. Namely, the present invention includes, of course, various modifications that may be made by a person skilled in the art according to the entire disclosure including claims and technical ideas. In addition, all Patent and Non-Patent Literatures mentioned in this specification are incorporated by reference in its entirety.

DESCRIPTION OF REFERENCE NUMERALS

| 1, 1A, 1B, 1C | Information processing device |
| 2 | Sensor group |
| 3 | Lidar |
| 5 | GPS receiver |
| 7, 7C | Server device |
| 10 | River map DB |

**Claims**

**1.** An information processing device comprising:

a predicted water level information acquisition unit configured to acquire predicted water level information regarding predicted water levels at water level prediction points at which a water level is predicted on one or more candidate routes serving as candidates for an operation route of a ship;

a predicted bridge water level calculation unit configured to calculate, based on the predicted water level information, a predicted bridge water level which is a predicted water level at an expected passing time when the ship passes each bridge passing point, which is a point of each of bridges passed by the ship, the bridges existing on the candidate routes; and

a determination unit configured to determine, based on the predicted bridge water level, a suitability of each of the candidate routes as the operation route.

2. The information processing device according to claim 1,
   wherein the determination unit is configured to

   determine a passing feasibility under each of the bridges by the ship based on the predicted bridge water level and determine the suitability based on a determination result regarding the feasibility.

3. The information processing device according to claim 2,
   wherein the determination unit is configured to determine the passing feasibility based on

   a bridge height representing a height of each of the bridges based on map data and
   a ship highest point height representing a height of a highest point of the ship calculated based on the predicted bridge water level.

4. The information processing device according to claim 3, further comprising
   a ship highest point height calculation unit configured to calculate the ship highest point height based on

   water surface measurement data which is measurement data of a water surface measured by a measurement device provided on the ship,
   highest point information regarding a height from a reference position of the ship to the highest point of the ship and the predicted bridge water level.

5. The information processing device according to any one of claims 1 to 4, further comprising
   an operation route determination unit configured to determine the operation route based on a determination result regarding the suitability.

6. The information processing device according to claim 5,
   wherein the operation route determination unit is configured to display a screen image for selecting the operation route from the candidate routes determined to be suitable when the candidate routes determined to be suitable are plural.

7. The information processing device according to any one of claims 1 to 6, further comprising

   a candidate route acquisition unit configured to acquire a plurality of the candidate routes with different expected departure times,
   wherein the predicted bridge water level calculation unit is configured to calculate the expected passing time and the predicted bridge water level, based on the predicted water level information and the expected departure times of the candidate routes.

8. The information processing device according to any one of claims 1 to 7,
   wherein the predicted bridge water level calculation unit is configured to calculate the predicted bridge water level corresponding to the each bridge passing point, based on the predicted water level at water level prediction points nearest to the each bridge passing point in upstream and downstream directions of the river, respectively.

9. A determination method executed by a computer, the determination method comprising:

   acquiring predicted water level information regarding predicted water levels at water level prediction points at which a water level is predicted on one or more candidate routes serving as candidates for an operation route of a ship;
   calculating, based on the predicted water level information, a predicted bridge water level which is a predicted water level at an expected passing time when the ship passes each bridge passing point, which is a point of each of bridges passed by the ship,

the bridges existing on the candidate routes; and

determining, based on the predicted bridge water level, a suitability of each of the candidate routes as the operation route.

10. A program causing a computer to:

acquire predicted water level information regarding predicted water levels at water level prediction points at which a water level is predicted on one or more candidate routes serving as candidates for an operation route of a ship;

calculate, based on the predicted water level information, a predicted bridge water level which is a predicted water level at an expected passing time when the ship passes each bridge passing point, which is a point of each of bridges passed by the ship,

the bridges existing on the candidate routes; and

determine, based on the predicted bridge water level, a suitability of each of the candidate routes as the operation route.

11. A storage medium storing the program according to claim 10.

# FIG. 1

FIG. 2A

FIG. 2B

FIG. 3A

FIG. 3B

FIG. 4A

FIG. 4B

# FIG. 5

FIG. 6A

FIG. 6B

FIG. 7

FIG. 8

| BRIDGE | EXPECTED PASSING TIME | PREDICTED BRIDGE WATER LEVEL | PREDICTED CLREARANCE |
|---|---|---|---|
| BRIDGE B1 | 9/12 15:30 | a [m] | d [m] |
| BRIDGE B2 | 9/12 16:03 | b [m] | e [m] |
| BRIDGE B3 | 9/12 16:29 | c [m] | f [m] |
| . . . | . . . | . . . | . . . |

FIG. 9

# FIG. 10

OPERATION ROUTE
DETERMINATION PROCESS START

S11

ACQUIRE CANDIDATE ROUTE

S12

RECEIVE PREDICTED WATER LEVEL INFORMATION INDICATING
PREDICTED WATER LEVEL AT EACH WATER LEVEL PREDICTION
POINT ON EACH CANDIDATE ROUTE

S13

CALCULATE EXPECTED PASSING TIME & PREDICTED BRIDGE WATER
LEVEL AT EACH BRIDGE PASSING POINT ON EACH CANDIDATE
ROUTE

S14

ACQUIRE BRIDGE HEIGHT OF EACH BRIDGE ON EACH CANDIDATE
ROUTE FROM RIVER MAP DATA

S15

CALCULATE WATER SURFACE DISTANCE
BASED ON WATER MEASUREMENT DATA

S16

CALCULATE SHIP HIGHEST POINT HEIGHT
AT EACH BRIDGE PASSING POINT
BASED ON PREDICTED BRIDGE WATER LEVEL, WATER SURFACE
DISTANCE, & HIGHEST POINT INFORMATION

S17

CALCULATE PREDICTED CLEARANCE &
DETERMINE PASSING FEASIBILITY
BASED ON BRIDGE HEIGHT & SHIP HIGHEST POINT HEIGHT

S18

SELECT CANDIDATE ROUTE
WITH ALL PASSABLE BRIDGE AS OPERATION ROUTE

END

# FIG. 11

<u>1A</u>

INTERFACE  11

MEMORY  12

10  RIVER MAP DB

IH  HIGHEST POINT
INFORMATION

CONTROLLER  13

BRIDGE PASSING
FEASIBILITY
DETERMINATION UNIT  16A

PREDICTED WATER
LEVEL CORRECTION UNIT  18A

# FIG. 12

FIG. 13

FIG. 14A

WATER LEVEL

60a 60b 60c 60d 60e 60f 60g 60h 60i 60j 60k

68a 68b 68c 68d 69 68e

TIME

○ : PREDICTED WATER LEVEL AT WATER LEVEL PREDICTION POINT

◌ : MEASURED WATER LEVEL AT WATER LEVEL MEASUREMENT POINT

↑ : WIDTH EQUIVALENT TO WATER LEVEL DIFFERENCE VALUE

▬ ▬ ▬ : MEASURED CONTINUOUS WATER LEVEL OBTAINED BY INTERPOLATION

FIG. 14B

FREQUENCY

AVERAGE

STANDARD DEVIATION

0

WATER LEVEL DIFFERENCE VALUE

FIG. 15

| BRIDGE | EXPECTED PASSING TIME | CORRECTED BRIDGE WATER LEVEL | PREDICTED CLREARANCE |
|---|---|---|---|
| BRIDGE B1 | 9/12 15:30 | aa [m] | dd [m] |
| BRIDGE B2 | 9/12 16:03 | bb [m] | ee [m] |
| BRIDGE B3 | 9/12 16:29 | cc [m] | ff [m] |
| ... | ... | ... | ... |

FIG. 16

# FIG. 17

WATER LEVEL CORRECTION
INFORMATION GENERATION PROCESS
START

S21

CALCULATE FEATURE DISTANCE
BASED ON FEATURE MEASUREMENT DATA

S22

CALCULATE SHIP REFERENCE HEIGHT
BASED ON FEATURE DISTANCE & FEATURE HEIGHT ACCORDING TO
RIVER MAP DB

S23

CALCULATE MEASURED WATER LEVEL
BASED ON SHIP REFERENCE HEIGHT &
WATER SURFACE DISTANCE CALCULATED FROM WATER SURFACE
MEASUREMENT DATA

S24

GENERATE WATER LEVEL CORRECTION INFORMATION BASED ON
COMPARISON RESULTS BETWEEN PREDICTED WATER LEVEL &
INTERPOLATED MEASURED WATER LEVEL
AT WATER LEVEL PREDICTION POINTS

END

# FIG. 18

# FIG. 19

# FIG. 20

## VOXEL DATA

| VOXEL ID |
|---|

| VOXEL COORDINATE VALUE |
|---|

| ATTRIBUTE INFORMATION |
|---|

| MEAN VECTOR |
|---|

| COVARIANCE MATRIX |
|---|

⋮

## FIG. 21

19B : SELF POSITION ESTIMATION UNIT

VOXEL DATA — VD

3 — LIDAR

92 — COORDINATE TRANSFORMATION UNIT

93 — WATER SURFACE REFLECTION DATA DELETION UNIT

94 — NDT POSITION CALCULATION UNIT

→ ESTIMATED SELF POSITION

6 — IMU

4 — VELOCITY SENSOR

91 — DEAD RECKONING UNIT

FIG. 22

FIG. 23A

WATER LEVEL

69B

68e

68d

68b    68c

68a

TIME

○ :PREDICTED WATER LEVEL AT WATER
    LEVEL PREDICTION POINT
↑ :WIDTH EQUIVALENT TO WATER LEVEL DIFFERENCE VALUE

━━ :MEASURED WATER LEVEL BASED ON SELF
    POSITION ESTIMATION RESULT

FIG. 23B

FREQUENCY

AVERAGE

STANDARD
DEVIATION

0

WATER LEVEL
DIFFERENCE VALUE

FIG. 24

# FIG. 25

WATER LEVEL CORRECTION INFORMATION
GENERATION PROCESS
START

S31

ACQUIRE SHIP REFERENCE HEIGHT BASED ON SELF POSITION
ESTIMATION RESULT

S32

CALCULATE MEASURED WATER LEVEL
BASED ON WATER SURFACE DISTANCE CALCULATED FROM SHIP
REFERENCE HEIGHT & WATER SURFACE MEASUREMENT DATA

S33

GENERATE WATER LEVEL CORRECTION INFORMATION BASED ON
COMPARISON RESULT BETWEEN PREDICTED WATER LEVEL &
MEASURED WATER LEVEL AT WATER PREDICTION POINTS

END

# FIG. 26

7C

SERVER DEVICE

D1   D2

1C

1Ca   1Cb

INFORMATION
PROCESSING
DEVICE

INFORMATION
PROCESSING
DEVICE

· · ·

# FIG. 27

<u>7C</u>

71

INTERFACE

73

CONTROLLER

72

70

MEMORY

PREDICTED
WATER LEVEL DB

75

MEASURED WATER
LEVEL INFORMATION
DB

# FIG. 28A

70

| WATER LEVEL PREDICTION POINT | UPDATE TIME | PREDICTED WATER LEVEL | | |
|---|---|---|---|---|
| | | TIME a | TIME b | · · · |
| (va, wa) | 9/12 17:00 | ga [m] | gb [m] | · · · |
| (vb, wb) | 9/12 17:00 | ha [m] | hb [m] | · · · |
| (vc, wc) | 9/12 17:00 | ia [m] | ib [m] | · · · |
| · · · | · · · | · · · | · · · | · · · |

# FIG. 28B

D2

| POSITION INFORMATION | TIME | WATER LEVEL DIFFERENCE VALUE | WATER LEVEL DIFFERENCE STANDARD DEVIATION | PREDICTED WATER LEVEL | MEASURED WATER LEVEL |
|---|---|---|---|---|---|
| (xa, ya) | 9/12 15:33 | dd [m] | pp[m] | gg [m] | jj [m] |
| (xb, yb) | 9/12 16:10 | ee [m] | qq[m] | hh [m] | kk [m] |
| (xc, yc) | 9/12 16:39 | ff [m] | rr[m] | ii [m] | ll [m] |
| · · · | · · · | · · · | · · · | · · · | · · · |

# FIG. 29

FIG. 30A

```
      ( INFORMATION PROCESSING )
      (    DEVICE START        )
                 |
                 v
S41  +-----------------------------------------+
     |          RECEIVE & STORE                |
     |   PREDICTED WATER LEVEL INFORMATION     |
     +-----------------------------------------+
                 |
                 v  <----------------------+
S42  +-----------------------------------------+
     |            CALCULATE                    |
     | MEASURED WATER LEVEL & WATER LEVEL       |
     |        DIFFERENCE VALUE                  |
     +-----------------------------------------+
                 |
                 v
S43      < TRANSMISSION TIMING? >----- No ----+
                 |
              Yes |
                 v
S44  +-----------------------------------------+
     |        TRANSMIT UPLOAD INFORMATION       |
     +-----------------------------------------+
                 |
                 v
              (  END  )
```

FIG. 30B

```
      ( SERVER DEVICE )
      (    START      )
                 |
                 v  <----------------------+
S51  +-----------------------------------------+
     |     RECEIVE & STORE UPLOAD INFORMATION   |
     +-----------------------------------------+
                 |
                 v
S52      < UPDATE TIMING? >----- No ----------+
                 |
              Yes |
                 v
S53  +-----------------------------------------+
     |            CALCULATE                     |
     |  UPDATE VALUE OF PREDICTED WATER LEVEL   |
     +-----------------------------------------+
                 |
                 v
S54  +-----------------------------------------+
     |         UPDATE WATER LEVEL DB            |
     +-----------------------------------------+
                 |
                 v
              (  END  )
```

# INTERNATIONAL SEARCH REPORT

| International application No. |
|---|
| **PCT/JP2021/033331** |

**A.      CLASSIFICATION OF SUBJECT MATTER**

*B63B 43/18*(2006.01)i; *B63B 49/00*(2006.01)i; *G08G 3/00*(2006.01)i
FI:      B63B49/00 Z; B63B43/18; G08G3/00

According to International Patent Classification (IPC) or to both national classification and IPC

**B.      FIELDS SEARCHED**

Minimum documentation searched (classification system followed by classification symbols)

B63B43/18; B63B49/00; G08G3/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.      DOCUMENTS CONSIDERED TO BE RELEVANT**

| Category* | Citation of document, with indication, where appropriate, of the relevant passages | Relevant to claim No. |
|---|---|---|
| Y | CN 108919299 A (WUHAN TECH UNIVERSITY) 30 November 2018 (2018-11-30) paragraphs [0024]-[0086], fig. 1-4 | 1-6, 9-11 |
| A | paragraphs [0024]-[0086], fig. 1-4 | 7-8 |
| Y | JP 2000-142570 A (JAPAN RADIO CO., LTD.) 23 May 2000 (2000-05-23) paragraphs [0009]-[0031], fig. 1-4 | 1-6, 9-11 |
| A | paragraphs [0009]-[0031], fig. 1-4 | 7-8 |
| A | CN 206863970 U (SOUTHWEST PETROLEUM UNIVERSITY) 09 January 2018 (2018-01-09) | 1-11 |
| A | CN 107945579 A (FOSHAN XIXUN ELECTRONIC TECH CO., LTD.) 20 April 2018 (2018-04-20) | 1-11 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 November 2021** | **16 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2021/033331**

| Patent document cited in search report | | | Publication date (day/month/year) | Patent family member(s) | Publication date (day/month/year) |
|---|---|---|---|---|---|
| CN | 108919299 | A | 30 November 2018 | (Family: none) | |
| JP | 2000-142570 | A | 23 May 2000 | (Family: none) | |
| CN | 206863970 | U | 09 January 2018 | (Family: none) | |
| CN | 107945579 | A | 20 April 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013076829 A
- WO 2018221453 A
- JP 2020059403 A
- WO 2019188745 A